# EUROPEAN PATENT SPECIFICATION

(11) **EP 0 546 339 B1**
(45) Date of publication and mention of the grant of the patent: **03.07.1996**
(21) Application number: 92119369.4
(22) Date of filing: 12.11.1992
(51) Int. Cl.: G05B 19/042, G06F 11/00

(54) **Distributed control system**
Verteiltes Steuersystem
Système à commande distribuée

(30) Priority: 09.12.1991 JP 324333/91; 11.12.1991 JP 327692/91; 11.12.1991 JP 327694/91
(43) Date of publication of application: 16.06.1993
(73) Proprietor: Yokogawa Electric Corporation, Tokyo 180 (JP)
(72) Inventor: Shioe, Yasuhiko, Meguro-ku, Tokyo 153 (JP); Akiyama, Chuji, Setagaya-ku, Tokyo 156 (JP); Shirai, Toshiaki, Iruma-shi, Saitama-ken 358 (JP); Sakamoto, Hideyuki, Higashimurayama-shi, Tokyo 189 (JP); Yasui, Hitoshi, Higashikurume-shi, Tokyo 203 (JP); Ishikawa, Makio, Fuchu-shi, Tokyo 183 (JP); Matsukawa, Hideo, Ohta-ku, Tokyo 145 (JP)
(74) Representative: Henkel, Feiler, Hänzel & Partner

(56) References cited:
- DE-A- 3 401 783
- US-A- 3 997 879
- US-A- 4 639 889

## Description

### BACKGROUND OF THE INVENTION

### 1. Field of the Invention

The present invention relates to a distributed control system that controls process variables, for example, temperature, pressure, etc. More particularly, the present invention relates to a distributed control system comprising a control station which takes charge of various kinds of control operation, and a plurality of remote input/output devices which are distributed separately from the control station to exchange signals with sensors, actuators, etc. More specifically, the present invention relates to transmission control of a data bus (remote input/output bus) that connects the control station and the remote input/output devices in the distributed control system.

Further, the present invention relates to measures which are taken to cope with a power failure in a system where a control station and a remote input/output device are supplied with electric power from power supply systems which are independent of each other.

### 2. Description of the Prior Art

A typical distributed control system is supplied with a large number of input signals from a process as a controlled system and outputs manipulated variable signals to a large number of control elements. In order to allow the whole controlled system to be monitored and controlled comprehensively, a plurality of remote input/output devices are connected to the control station in accordance with the nature of each particular task assigned thereto.

Between the control station and the remote input/output devices is provided a shared memory to which read/write access can be made from both the control station side and the remote input/output device side, and cyclic scan transmission is carried out for each remote input/output device through a remote input/output bus so that the contents of a data buffer used by a microprocessor in the control station and input/output data on the remote input/output device side are maintained equivalently.

Such cyclic scan transmission is carried out according to preset transmission conditions, for example:
(a) the correspondence between the input/output nodes of the remote input/output devices and the respective addresses on the shared memory;
(b) the cyclic scan transmission cycle used for each input/output node; and
(c) the kind of transmission service (e.g., reading of input data, exchange of output data for read-back data, and so forth) that is to be performed for each input/output node.

A typical conventional system of the type described above is arranged such that when a power supply for the system fails and then recovers from the failure, the microprocessor in the control station executes the above described cyclic scan transmission again.

Such a system is disclosed in US-A-4 639 889, where timer watching is performed, to detect a transmission cutoff due to a power failure. The reaction of the system upon such a transmission cuttoff is not controlled by the time duration of the power failure, but is just actuated after time over detection. After the restoration of the power an assembly performs an initial malfunction treatment to restore the normal state.

### SUMMARY OF THE INVENTION

The conventional system, arranged as described above, suffers from the problem that when the power supply recovers from a power failure, the normal transmission control, which is carried out by using the remote input/output bus, cannot be started promptly because the microprocessor in the control station has been doing various kinds of work for recovery from the power failure, and a great deal of time is required for the system to recover its normal process control operation.

In view of the above-described problems of the prior art, it is an object of the present invention to provide a distributed control system which is capable of promptly recovering its normal process control operation in such a case that the power supply recovers from a power failure.

It is another object of the present invention to provide a distributed control system which is designed so that a remote input/output device can be disposed at a distance from a control station, and it is unnecessary to bring a field wiring, which connects with sensors or the like, into the control station.

According to the present invention there is provided a distributed control system as defined in claim 1. Further favourable developments of this distributed control system are described in the subclaims 2 to 12.

### BRIEF DESCRIPTION OF THE DRAWINGS

Fig. 1 is a conceptual view showing the arrangement of the distributed control system according to the present invention.

Fig. 2 is a block diagram showing one embodiment of the present invention.

Fig. 3 illustrates basic operating modes prepared for each of normal, continuation and initialization start transmission service means.

Fig. 4 is a flowchart showing an operation that takes place when a momentary power failure occurs on the remote input/output device side.

Fig. 5 is a flowchart showing an operation that takes place when a power failure occurs on the control station side.

Fig. 6 is a block diagram showing a data transfer function, which is used in each of the transmission service means, the figure mainly showing a function used to transfer data from the remote input/output device side.

Fig. 7 is a timing chart showing an operation of scan communication performed between a control station and a remote input/output device.

Fig. 8 shows one example of the arrangement of a signal (communication frame or communication packet) sent to a control station through a bus.

Fig. 9 is a block diagram showing a data transfer function, which is used in the normal transmission service means, the figure mainly showing a function used to transfer data from the control station side to the remote input/output device side.

Fig. 10 is a timing chart showing an operation of scan communication that is carried out from a control station to a remote input/output device.

Fig. 11 is a block diagram showing a data transfer function, which is used in each of the transmission service means, the figure mainly showing a function that is used to effect reliable data transmission between a control station and a remote input/output device with handshaking executed therebetween.

Fig. 12 is a timing chart showing a scan communication operation that is performed by a data sending station (control station) and a data receiving station (remote input/output device) in the arrangement shown in Fig. 11.

Fig. 13 is a block diagram showing one example of an input circuit for inputting a DC voltage signal, an on/off signal of a switching element, and an AC voltage signal in a remote input/output device.

Fig. 14 is a timing chart showing one example of the operation of the input circuit shown in Fig. 13.

Fig. 15 is a block diagram showing one example of a digital filter circuit in the arrangement shown in Fig. 13.

Fig. 16 is a timing chart showing the operation of the circuit shown in Fig. 15.

Fig. 17 is a block diagram showing another example of the digital filter circuit in the arrangement shown in Fig. 13.

Fig. 18 is a timing chart showing the operation of the circuit, which is shown in Fig. 17, in the case of full-wave rectification.

Fig. 19 is a circuit diagram showing another arrangement of a gate circuit employed in the circuits shown in Figs. 15 and 17.

Fig. 20 is a block diagram showing one example of a digital filter that is employed in a case where a rectifier circuit that is shown in Fig. 13 performs half-wave rectification.

Fig. 21 is a timing chart showing the operation of the digital filter shown in Fig. 20.

Fig. 22 is a block diagram showing another example of a digital filter that is employed in a case where the rectifier circuit that is shown in Fig. 13 is a half-wave rectifier circuit.

Fig. 23 is a conceptual view showing a voltage signal input circuit which may be employed when a plurality of voltage signals are input.

Fig. 24 is a conceptual view showing an arrangement in which a bus that connects a control station and a remote input/output device is doubled.

Fig. 25 is a conceptual view showing the way of processing a communication packet that is sent to an internal bus that connects each of input/output units and a communication interface (assumed to be a parallel interface) in a remote input/output device.

Fig. 26 is a block diagram of an arrangement which enables a reset state in a remote input/output device to be canceled from a control station.

### DESCRIPTION OF THE PREFERRED EMBODIMENTS

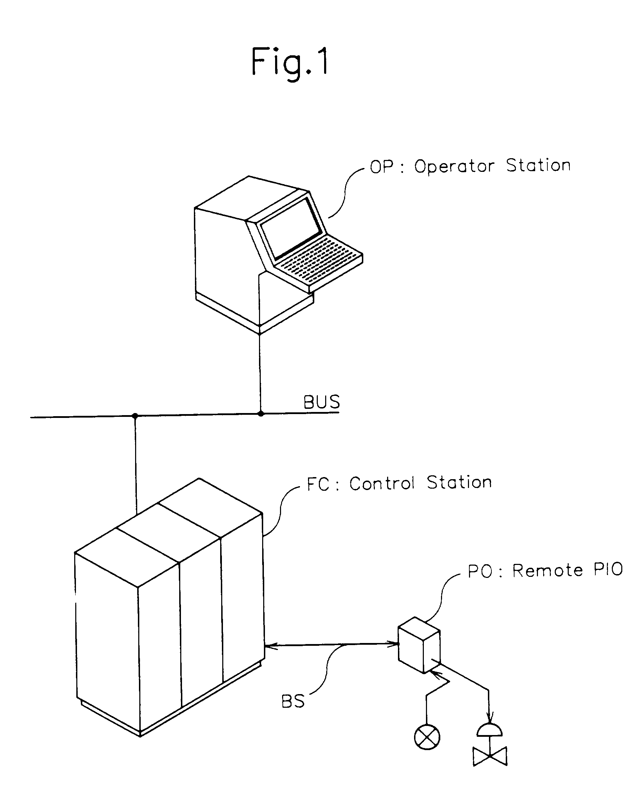

Fig. 1 is a conceptual view showing the arrangement of the distributed control system according to the present invention. Referring to the figure, a plurality of control stations FC take charge of control operation for a process as a controlled system. The number of control stations FC distributed over the control field depends on the scale of the process. A remote input/output device PO is provided for each control station FC. The remote input/output device PO is supplied with normalized analog signals, contact signals or various digital signals from various sensors or other similar devices disposed in the process field, and it sends a control output (manipulated variable signal) to a control element such as a valve. The control station FC and the remote input/output device PO are connected through a bus BS, and fixed-cycle communication (scan communication) of input/output data is performed therebetween.

An operator station OP functions as a man-machine interface and has a keyboard and a CRT. The operator station OP is installed in an instrument panel room, for example. The operator station OP is arranged to be capable of displaying process data sent from each control station FC through a communication network BUS, of instructing the control station FC to change set values, control parameters and so forth, and of performing a process control operation.

Between the control station FC and the remote input/output device PO, scan communication of input/output data is constantly performed through the bus BS, so that the state of data that is handled by the remote input/output device PO is reflected on a memory incorporated in the control station FC.

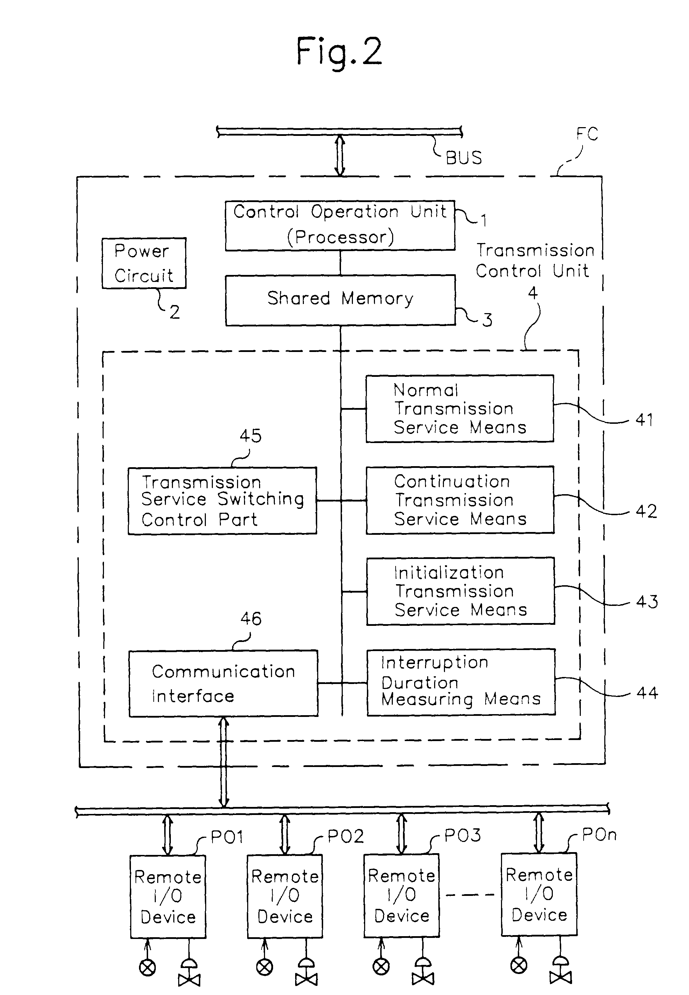

Fig. 2 is a block diagram showing one embodiment of the present invention.

Referring to the figure, a control station FC, which is in charge of control operation, is connected with a plurality of remote input/output devices PO1, PO2, PO3...POn through a remote input/output bus BS. The remote input/output devices are distributed over the control field separately from the control station FC and arranged to be supplied with input signals from various sensors installed in the field and to output control signals to actuators such as valves.

In the control station FC, a control operation unit (processor) 1 takes charge of control operation, for example, PID control operation and sequence control operation. A power circuit 2 supplies electric power to each part of the control station FC. A non-volatile shared memory 3 is arranged so that the control operation unit 1 can gain read/write access to the shared memory 3 and that input/output data which are transmitted to and from the remote input/output devices PO1, PO2, PO3...POn through the remote input/output bus BS can be written cyclically into the memory 3 in a cycle with which oversampling is made with respect to the operation cycle of the control operation processor 1.

A transmission control unit 4 controls transmission performed through the remote input/output bus BS. In the transmission control unit 4, a normal transmission service means 41 performs cyclic scan transmission so that input/output data handled by the control operation unit 1 and input/output data on the remote input/output device (PO) side are maintained equivalently during the data transmission carried out by using the remote input/output bus BS in a normal control operating state. A continuation transmission service means 42 first performs transmission for urgent output only and then performs the normal cyclic scan transmission service after the completion of the transmission of the urgent data. An initialization start transmission service means 43 first performs only cyclic scan transmission for fetching input data. Every one of these means is realized by using a microprocessor (not shown) provided in the transmission control unit 4.

An cutoff duration measuring means 44 measures a period of transmission cutoff duration in which the transmission via the remote input/output bus BS is interrupted by e.g. a power failure. The cutoff duration measuring means 44 comprises a timer which is backed up with a battery so that even when the supply of power from the power circuit 2 fails, the operation of the cutoff duration measuring means 44 continues. A transmission service switching control part 45 performs switching control such that when the result of measurement made by the cutoff duration measuring means 44 is shorter than a predetermined time, it activates the continuation transmission service means 42, whereas, when the result of measurement by the cutoff duration measuring means 44 is longer than the predetermined time, the transmission service switching control part 45 activates the initialization start transmission service means 43. A communication interface 46 is arranged to send output data to the remote input/output bus BS after changing it normally to bit-serial signals and formatting them in a predetermined manner and to receive such signals.

The operation of the control system, arranged as described above, will be explained below.

### Operation in the normal control operating state:

The normal transmission service means 41 in the transmission control unit 4 performs the cyclic scan transmission so that input/output data handled by the control operation unit 1 and input/output data on the remote input/output device side are maintained equivalently. The cyclic scan transmission is carried out in a cycle with which oversampling is made with respect to the control operation cycle of the control operation processor 1. Input/output data from the remote input/output devices PO1, PO2, PO3...POn is written into the shared memory 3, and the contents of the memory 3 are updated.

The control operation unit 1 reads out the input/output data from the shared memory 3 in the control operation cycle and performs predetermined control operation by using the readout data. For example, the control operation unit 1 performs PID control operation on the deviation of a measured value (PV), which is obtained from the process, from a preset value (SV) for control to obtain a control output (MV). Then, the control operation unit 1 writes the result of the operation into the shared memory 3. The output data, written into the shared memory 2 by the control operation unit 1, is sent to the remote input/output devices PO1, PO2, PO3...POn to control the operation of actuators linked to the remote input/output devices PO1, PO2, PO3...POn.

The above control action realizes a control operation in which the opening of a valve, for example, is controlled so as to follow up the result of the arithmetic operation performed by the control operation unit 1.

It should be noted here that the correspondence between the remote input/output devices PO1, PO2, PO3...POn and the respective address positions on the shared memory 3 and what kind of transmission service is to be performed have been set for each remote input/output device in advance of the time of starting the operation of the system.

### Operation in a case where a momentary transmission cutoff occurs:

The cutoff duration measuring means 44 monitors the transmission condition on the remote input/output bus BS for each remote input/output device, and when the period of transmission cutoff duration is shorter than a predetermined time, it judges that a momentary transmission interruption or cutoff has occurred. In this case, the transmission service switching control part 45 drives the continuation transmission service means 42. The continuation transmission service means 42 first performs transmission for urgent output, and after the completion of the urgent output transmission, it shifts the transmission mode to the normal cyclic scan transmission. It should be noted here that to which output node the urgent output transmission is to be performed is set in advance, together with other transmission conditions, for example, a limit number of times of retransmission, which is carried out when a transmission error occurs during the urgent output transmission.

### Operation in a case where a long transmission cutoff occurs:

When the cutoff duration measuring means 44, which monitors the transmission condition on the remote input/output bus BS, judges that the period of transmission cutoff duration is longer than a predetermined time, the transmission service switching control part 45 activates the initialization start transmission service means 43. The transmission service means 43 first performs only the cyclic scan transmission for inputting data (including read-back of an output value to an actuator), thereby updating the input data. After the completion of the transmission limited to the data input operation, the control operation unit 1 updates the output data as a result of the arithmetic operation and the shifts the transmission service to the normal transmission service.

In this way, the transmission service switching control part 45 carries out switching control of the operation performed by each transmission service means, depending upon the period of transmission cutoff duration, for each remote input/output device.

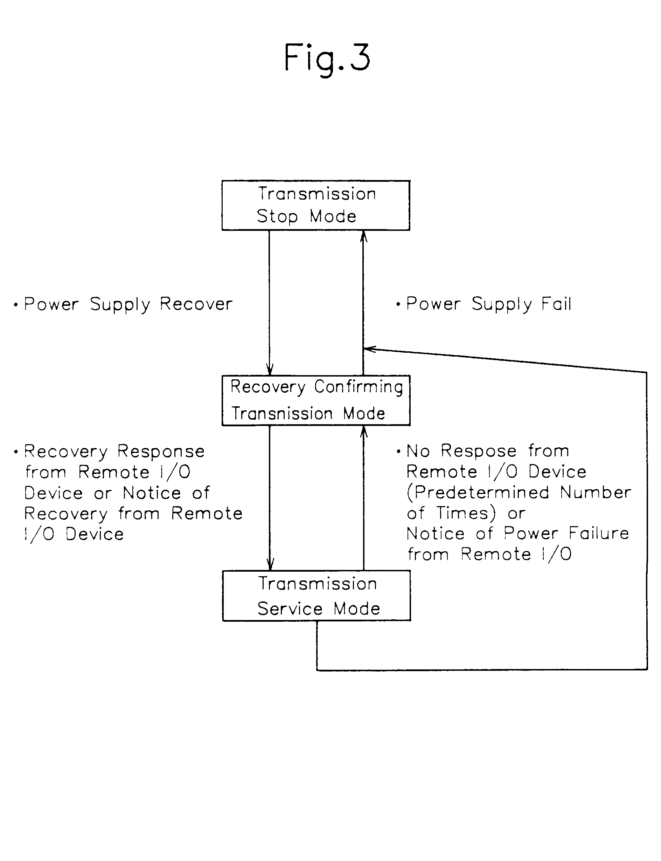

Fig. 3 illustrates basic operating modes prepared for each of the normal, continuation and initialization start transmission service means 41, 42 and 43.

Each transmission service means performs the above-described transmission service, depending upon the period of transmission cutoff duration, and has the following basic operating modes:

### Transmission stop mode:

The transmission service means enters this mode when a power failure occurs in the control operation unit 1 in a state where no data is being transmitted between the control operation unit 1 and any of the remote input/output devices.

### Recovery confirming transmission mode:

During this mode, no transmission (input/output transmission) for an application is carried out, but it is checked whether or not frame transmission can be performed between the control operation unit 1 and each remote input/output device.

When the control operation unit 1 recovers from the power failure, the operating mode shifts from the transmission stop mode to this mode.

### Transmission service mode:

During this mode, transmission (input/output transmission) for an application is carried out.

The operating mode shifts from the recovery confirming transmission mode to this mode when recovery response or notice of recovery is received from the remote input/output device side.

When no response from the remote input/output device side is received consecutively more than a predetermined number of times, or when a power failure notice signal is output from the remote input/output device side, the operating mode shifts from this mode to the recovery confirming transmission mode.

It should be noted here that the cutoff duration measuring means (timer) 44 operates in such a manner as to start measuring time at the point of time when the operating mode shifts from the transmission service mode to the recovery confirming transmission mode, and stop the measurement of time at the point of time when the recovery processing in the recovery confirming transmission mode is completed, thereby determining the time interval between the two points to be a period of transmission cutoff duration.

With the above-described arrangement, when the power supply recovers from a power failure, the most appropriate transmission service means is activated, depending upon the period of transmission cutoff duration, so that the system can recover rapidly from the transmission cutoff state and shift to the normal process control operation promptly.

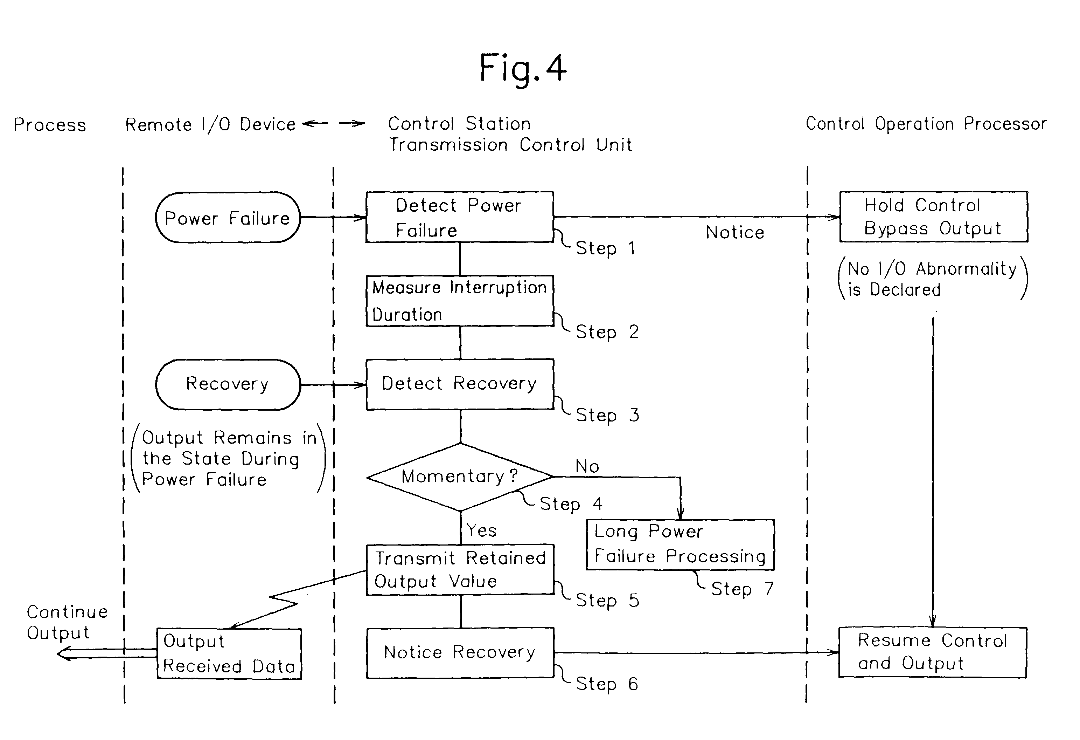

Fig. 4 is a flowchart showing an operation that takes place when a momentary power failure occurs on the remote input/output device (PO) side.

The control station FC is provided with an output data holding means that always holds the latest output data that is delivered to the remote input/output device (PO) side. When a power failure occurs on the remote input/output device (PO) side, the cutoff duration measuring means 44 detects it via the remote input/output bus BS (Step 1) and measures the period of cutoff duration (Step 2). It should be noted here that the occurrence of a power failure on the remote input/output device (PO) side and the recovery from the power failure may be detected by receiving a notice signal representative of the occurrence of a power failure and a recovery notice signal, which are sent from the remote input/output device (PO) side. It is also possible to detect the occurrence of a power failure and the recovery therefrom from an cutoff or interruption of data transmission, which is carried out cyclically by using the bus BS.

When the power supply on the remote input/output device (PO) side recovers from the failure, the cutoff duration measuring means 44 detects the recovery and suspends the measurement of the period of cutoff duration (Step 3).

The transmission service switching control part 45 decides whether the power failure is momentary or not by judging whether the cutoff duration measured by the cutoff duration measuring means 44 is shorter or longer than a predetermined time (Step 4). If the power failure is judged to be a momentary power failure, the transmission service switching control part 45 activates the continuation transmission service means 42, so that, after the power supply has recovered from the failure, the output data delivered just before the occurrence of the power failure, which has been held in the output data holding means, is first transmitted to the remote input/output device (PO) side (Step 5).

On receipt of the output data from the control station (FC) side, the remote input/output device (PO) side sends it to the process side. Thus, the control output is continuously sent to the process side. Upon completion of the continuation start operation after the momentary power failure, the operation shifts to the cyclic scan transmission, which is performed by the normal transmission service means 41.

In addition, notice of recovery is sent to the control operation unit (processor) 1 (Step 6), so that the control operation and the sending of the control output are resumed.

It should be noted here that when a transmission error occurs during the transmission of the output data in the above-described continuation start operation, the transmission of the output data is repeated until the data is successfully transmitted, within a preset number of times. Such a number of times of retransmission of output data and other transmission conditions are set in advance.

If it is judged at Step 4 that a long power failure occurs on the remote input/output device (PO) side, the transmission service switching control part 45 activates the initialization start transmission service means 43 to execute processing for a long power failure (Step 7).

The processing for a long power failure is realized, for example, by executing the cyclic scan transmission for fetching the input data (including read-back of an output value to an actuator) and then updating the input data on the basis of the cyclic scan transmission. Upon completion of the transmission for initialization start, which is limited to fetching of the input data, the operation shifts to the normal cyclic scan transmission, which is performed by the normal transmission service means 41.

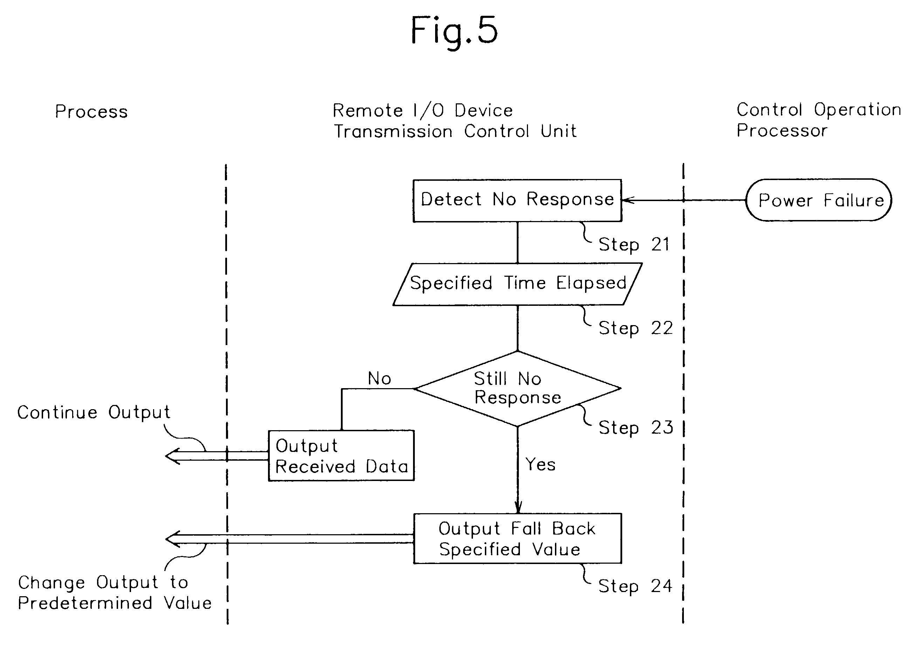

Fig. 5 is a flowchart showing an operation that takes place when a power failure occurs on the control station (FC) side.

When a power failure occurs on the control station (FC) side or there is an abnormality in the operation of the control station FC or a failure in the remote input/output bus BS, no data transmission is carried out through the remote input/output bus BS, and a time-up signal is sent from a watch dog timer, for example, which is provided in the control station FC. The remote input/output device PO is provided therein with a no-response detecting means that judges that there is an abnormality on the control station (FC) side by detecting no response to the data transmission through the remote input/output bus BS or detecting a time-up signal from the control station (FC) side.

When the no-response detecting means detects a no-response state (abnormal state) (Step 21) and the no-response state continues long (Steps 22 and 23), a signal representative of a prespecified safe value (default value) is sent to the process side (actuator side) (Step 24).

When the no-response time is short (e.g., in a case where the control station FC recovers from the abnormal state immediately), data that is received from the control station (FC) side is sent to the process side to continue the data output operation.

With the above-described operation, when a momentary power failure occurs on the remote input/output device side or the control station side, the control operation can be continued without suspending the control function. In addition, when there is a malfunction in the control station FC or a trouble in the input/output bus, the output value to the process can be changed to a safe value without causing runaway.

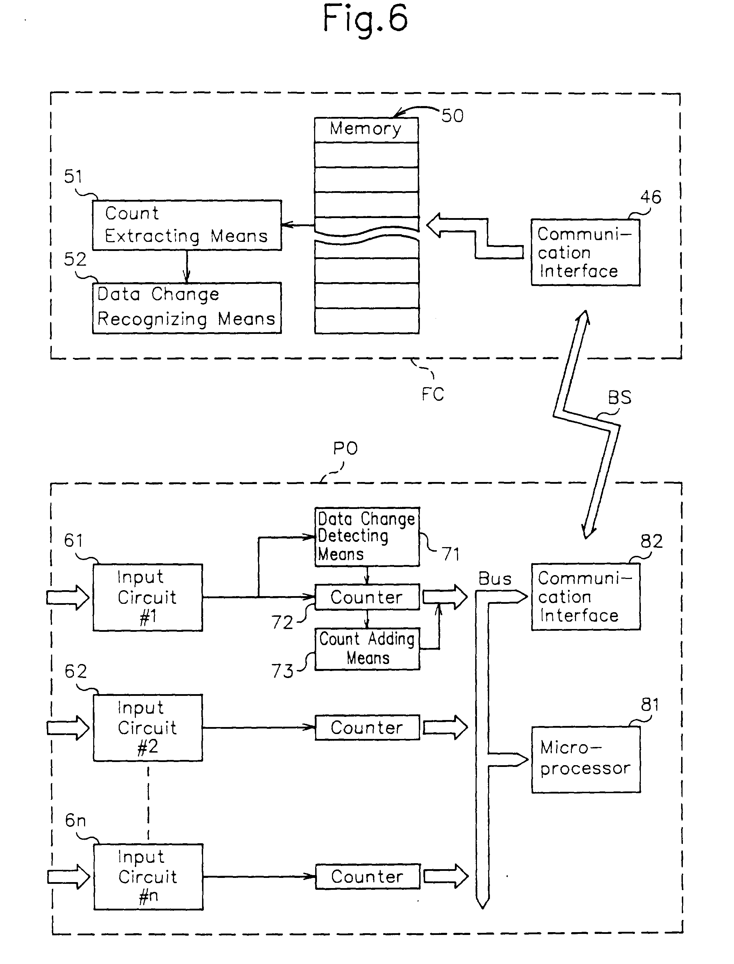

Fig. 6 is a block diagram showing a data transfer function, which is used in each of the transmission service means 41, 42 and 43. The figure mainly shows a data transfer function used to transfer data from the remote input/output device (PO) side.

In the remote input/output device PO, which serves as a data sending station, input circuits 61, 62... are provided to correspond to contact input signals, respectively, so as to process input contact signals to signals which can be handled by the remote input/output device PO by electrically isolating the contact signals and removing noise therefrom. A data change detecting means 71 detects whether or not there is a change in the data which is to be sent from the remote input/output device PO. A counter 72 is activated to count up or down when the data change detecting means 71 detects a change in the data. A count adding means 73 adds the value of the counter 72 to the signal which is to be sent from the remote input/output device PO. These means are provided for each input signal. A communication interface 82 performs data transmission between the remote input/output device PO and the control station FC. A microprocessor 81 is connected to the communication interface 82 through a bus BS. The data change detecting means 71, the counter 72 and the count adding means 73 are each realized by software.

In the control station FC, which serves as a data receiving station, a communication interface 46 is connected to the bus BS. The communication interface 46 receives signals (data) sent from the remote input/output device PO and stores them sequentially in a scan input image region of a memory 50 as scan input images. A count extracting means 51 extracts from scan input images a counter value sent by the present scan communication and a counter value sent by the preceding scan communication. A data change recognizing means 52 makes a comparison between the present and preceding counter values, which are extracted by the count extracting means 51, and recognizes that there is a change in the data when there is a difference between the two counter values.

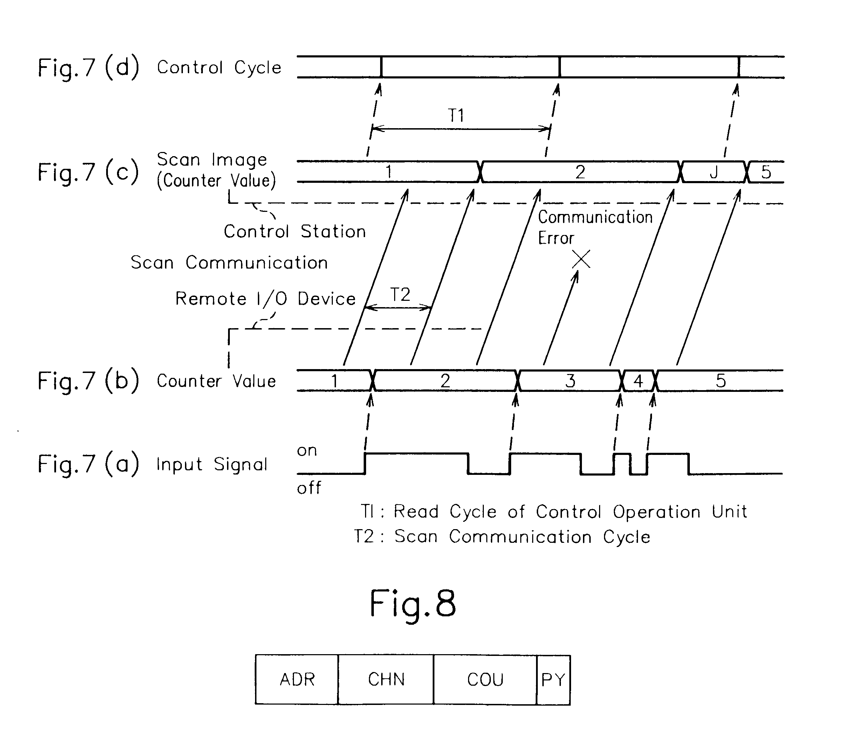

Fig. 7 is a timing chart showing an operation of scan communication performed between the control station FC and the remote input/output device PO.

In the figure, (a) shows on/off signals which are input to the remote input/output device PO from a pushbutton, for example. The data change detecting means 71 detects whether or not there is a change in the input signal, shown at (a) in Fig. 7, for example, a signal change from OFF to ON. When such a signal change occurs, the data change detecting means 71 causes the counter 72 to count up, for example, as shown at (b) in Fig. 7. In this example, it is assumed that the initial value of the counter 72 is "1" and the counter 72 counts up consecutively from the initial value, for simplification. It should be noted that the value of the counter 72 returns to the initial value when it reaches the counter capacity. The count adding means 73 reads the value of the counter 72 in the scan cycle T2 and adds the counter value to a communication frame (communication packet). The communication frame with the counter value added thereto is transmitted to the control station FC through the communication interface 82.

Fig. 8 shows one example of the arrangement of a signal (communication frame or communication packet) sent to the control station FC through the bus BS.

The communication frame comprises an address ADR of a remote input/output device PO, which is provided at the top, a channel number CHN of an input contact signal, which follows the address ADR, a counter value COU added as data, which follows the channel number CHN, and a parity PY provided at the end.

At the control station FC, the communication interface 46 writes sequentially signals sent thereto in the scan communication cycle T2 in a region of the memory 50 that constitutes a scan input image buffer, as shown at (c) in Fig. 7. The write cycle (update cycle) basically corresponds to the scan communication cycle T2. If a communication error occurs during the scan communication, as shown by X in between (b) and (c) in Fig. 7, the control station FC does not update the scan input image. When there are a plurality of input changes during one period of the scan communication cycle T2, as in the case of a part that is represented by the counter values "3, 4 and 5" in (b) of Fig. 7, the scan input image does not change consecutively, but a plurality of count-up operations are performed at a time, that is, the value is counted up from "3" to "5" directly, as shown at the corresponding portion in (c) of Fig. 7.

The scan input image, which is stored in the scan input image buffer, can be read according to need in the control station FC. In the case shown at (d) in Fig. 7, the scan input image is read out in the control cycle T1 of the control station FC. The reading of the scan input image is carried out as follows:

The count extracting means 51 extracts from the scan input image buffer a counter value sent in the present scan communication and a counter value sent in the preceding scan communication. Next, the data change recognizing means 52 makes a comparison between the present and preceding counter values, which are extracted by the count extracting means 51. If there is a difference between the present and preceding counter values, the data change recognizing means 52 recognizes that there is a change in the input contact signal, whereas, if there is no difference between the present and preceding counter values, the data change recognizing means 52 recognizes that there is no change in the input contact signal. Then, the data change recognizing means 52 transfers the result of the recognition to a CPU or the like in the control station FC.

If there is provided a means for obtaining increment data representative of an amount by which the present counter value has increased from the preceding counter value, it is possible to recognize the number of changes that have occurred since the preceding communication cycle.

Although the description has been made by way of an example in which an input contact signal is transferred from the remote input/output device PO to the control station FC, it should be noted that the present invention may also be applied to a case where data that is used to on/off control a valve, for example, is transferred from the control station FC to the remote input/output device PO. Further, the arrangement of the communication frame sent by scan communication is not necessarily limited to that shown in Fig. 8. In addition, although in the foregoing description the counter value is counted up, it may be counted down. Further, it should be noted that the term "counter" herein employed includes a means such as a register means in which a data value held therein changes in accordance with an input signal.

By executing the above-described scan communication for data transfer between the control station FC and the remote input/output device PO, a signal change can be transmitted reliably without omission or overlap of change information even if there is a communication error or a signal change that is more rapid than the scan communication cycle.

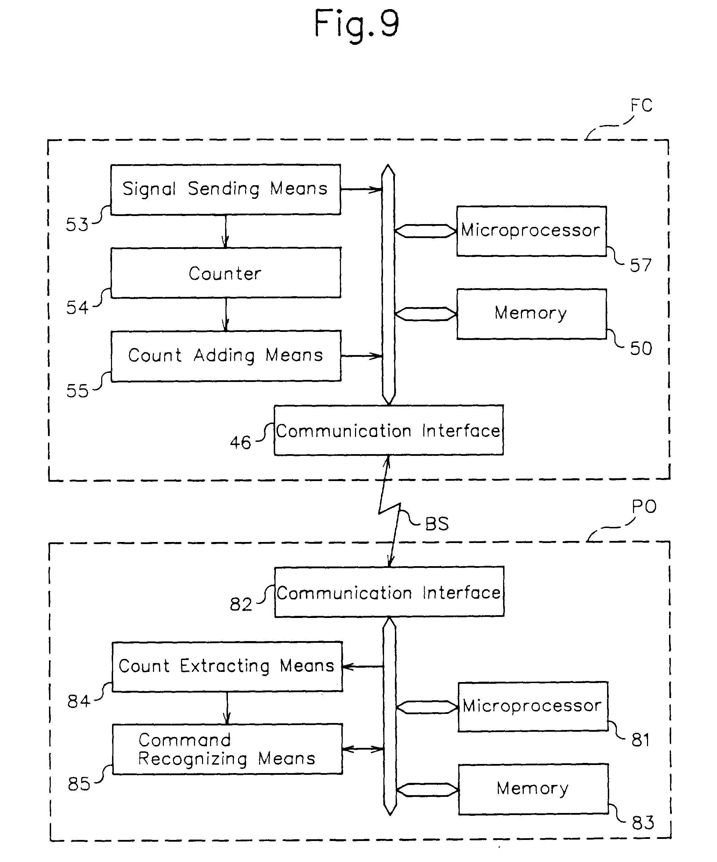

Fig. 9 is a block diagram showing a data transfer function, which is used in the normal transmission service means 41. The figure mainly shows a data transfer function used to transfer data from the control station FC to the remote input/output device PO. It is assumed that signals such as those which are represented by "A","B","C"... are transferred as processing commands from the control station FC to the remote input/output device PO.

In the control station FC, a signal sending means 53 sends commands for processing to be executed in the remote input/output device PO and other necessary signals. A counter 54 is activated to count up or down when a processing command sent from the signal sending means 53 is changed to another. A count adding means 55 adds the value of the counter 54 to the processing command which is to be sent from the control station FC. A microprocessor 57 realizes the signal sending means 53, the counter 54, and the count adding means 55 by using software.

In the remote input/output device PO, a communication interface 82 receives a signal sent from the control station FC. The received signal is stored in a memory 83. A count extracting means 84 extracts a counter value sent by the present scan communication and a counter value sent by the preceding scan communication. A command recognizing means 85 makes a comparison between the present and preceding counter values. If these two counter values are the same, the command recognizing means 85 continuously executes the operation based on the present processing command. If the two counter values are different from each other, the command recognizing means 85 judges that a new processing command has been sent, and commences processing based on the new processing command. A microprocessor 81 realizes the count extracting means 84 and the command recognizing means 85 by using software.

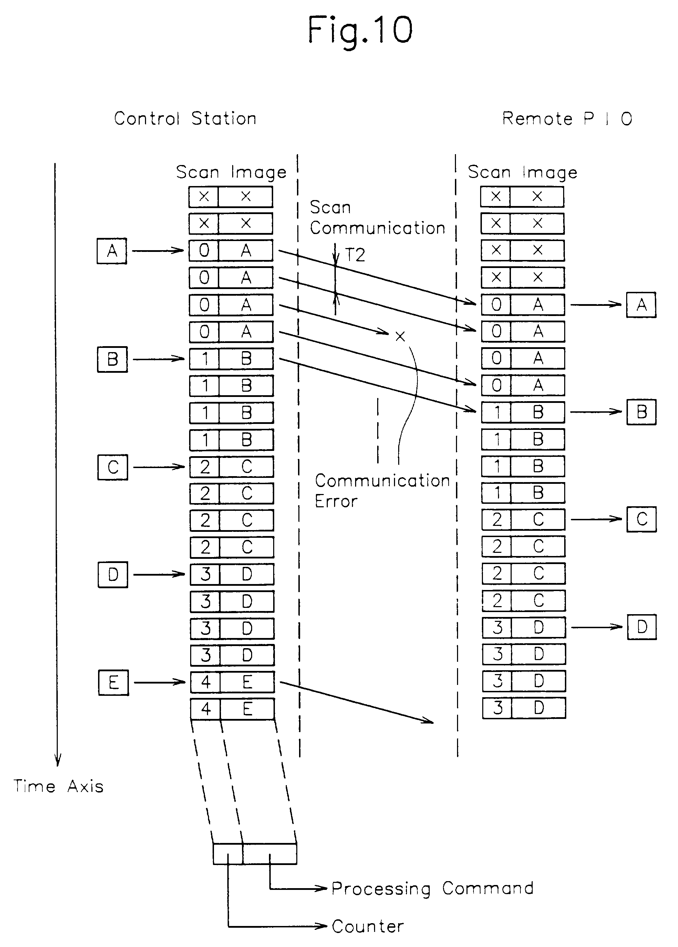

Fig. 10 is a timing chart showing an operation of scan communication that is carried out from the control station FC to the remote input/output device PO. In the timing chart, the time axis extends from the top to the bottom as viewed in the figure.

When the control station FC demands that the remote input/output device PO should execute processing "A", a processing command "A" for starting the processing concerned is sent from the signal sending means 53. The counter 54 is not activated to count up, for example, but maintained in the "0" state until next processing "B" is executed. The count adding means 55 adds the counter value "0" at this time to the processing command "A" and sends it to the remote input/output device PO. The same communication frame, which comprises a counter value and a processing command, is continuously sent for each scan cycle T2. Thus, scan input images are formed in the memory 83 provided in the remote input/output device PO.

If a communication error occurs during the scan communication, as shown by X in between the control station FC and the remote input/output device PO in Fig. 10, updating of the scan input image is not executed. In this example, it is assumed that the initial value of the counter 54 is "0" and the counter 54 counts up consecutively from the initial value, for simplification. The value of the counter 54 returns to the initial value when it reaches the counter capacity.

To allow the remote input/output device PO to execute the next processing "B", the control station FC changes the processing command to "B", activates the counter 54 to count up by one, and sends a communication frame comprising the counter value "1" and the processing command "B" to the remote input/output device PO. Thereafter, the control station FC successively changes the processing command and, at the same time, counts up the counter value, and then sends the resulting communication frame to the remote input/output device PO in the same way as the above.

In the remote input/output device PO, the count extracting means 84 extracts the counter values sent through the bus BS in the scan communication cycle, and the command recognizing means 85 refers to the extracted counter values. Then, the command recognizing means 85 makes a comparison between the present and preceding counter values, which are extracted by the count extracting means 84. If these two counter values are the same, the command recognizing means 85 maintains the present processing. If the two counter values are different from each other, e.g., in such a case that the counter value has been counted up from "0" to "1", the command recognizing means 85 judges that a new processing command has been sent, and starts the processing corresponding to the processing command "B".

Thus, the remote input/output device PO can start various kinds of processing according to the command signal sent from the control station FC on the basis of the result of the judgement made by the command recognizing means 85.

If should be noted that processing that is activated in the remote input/output device PO includes processing of sending a manipulated variable signal to a valve or the like installed in the process field, and processing of starting various kinds of program used in the remote input/output device PO. In addition, although in the foregoing description the counter value is counted up, it may be counted down. Further, it should be noted that the term "counter" herein employed includes a means such as a register means in which a digital signal held therein changes in accordance with an input signal applied thereto.

Thus, the remote input/output device PO can be reliably activated to execute desired processing by transmitting various commands thereto independently of a communication error or omission of information, if such occurs.

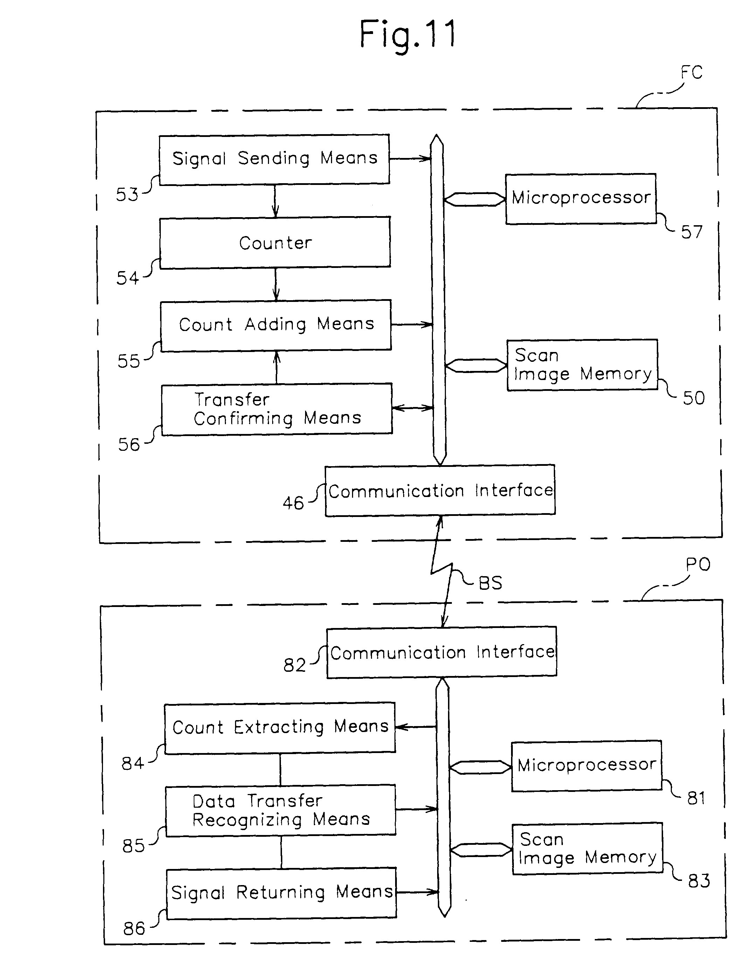

Fig. 11 is a block diagram showing a data transfer function, which is used in each of the transmission service means 41, 42 and 43. The figure mainly shows a data transfer function that is used to effect reliable data transmission between the control station FC and the remote input/output device PC with handshaking executed therebetween.

Fig. 11 is a functional block diagram arranged on the assumption that the control station FC is a data transmitting station, while the remote input/output device PO is a data receiving station. Accordingly, when bidirectional transfer of data is to be carried out, each device must be provided with both data sending and receiving functions.

In the control station FC, which serves as a data sending station, a transfer confirming means 56 makes a comparison between a combination of data and a counter value, which has been sent back from the remote input/output device PO, which serves as a data receiving station, and a combination of data and a counter value, which is now being sent out, thereby checking whether or not the data transfer has been surely effected.

If a match is found between the combination of data and a counter value, which has been sent back, and the combination of data and a counter value, which is now being sent out, the transfer confirming means 56 judges that the data transfer has been surely effected, and instructs the system to send new data, together with a counter value which has been counted up or down, to the receiving station. If a mismatch is found, the transfer confirming means 56 judges that the data transfer is not being surely effected, and instructs the signal sending means 53 to continue the sending of the data and the counter value, which are now being sent out. It should be noted that a microprocessor 57 realizes the signal sending means 53, the counter 54, the count adding means 55, and the transfer confirming means 56 by using software.

In the remote input/output device PO, which serves as a data receiving station, a count extracting means 84 extracts a counter value from the received signal. A data or command transfer recognizing means 85 recognizes that data transfer has started when it detects a difference between a counter value received in the present receiving operation and extracted by the count extracting means 84 and a counter value received in the preceding receiving operation and similarly extracted by the count extracting means 84. A signal returning means 86 returns, when receiving data and a counter value from the control station FC as a data transmitting station, the received data and counter value to the control station FC by scan communication in a predetermined cycle.

It should be noted that a microprocessor 81 realizes the count extracting means 84, the data transfer recognizing means 85, and the signal returning means 86 by using software.

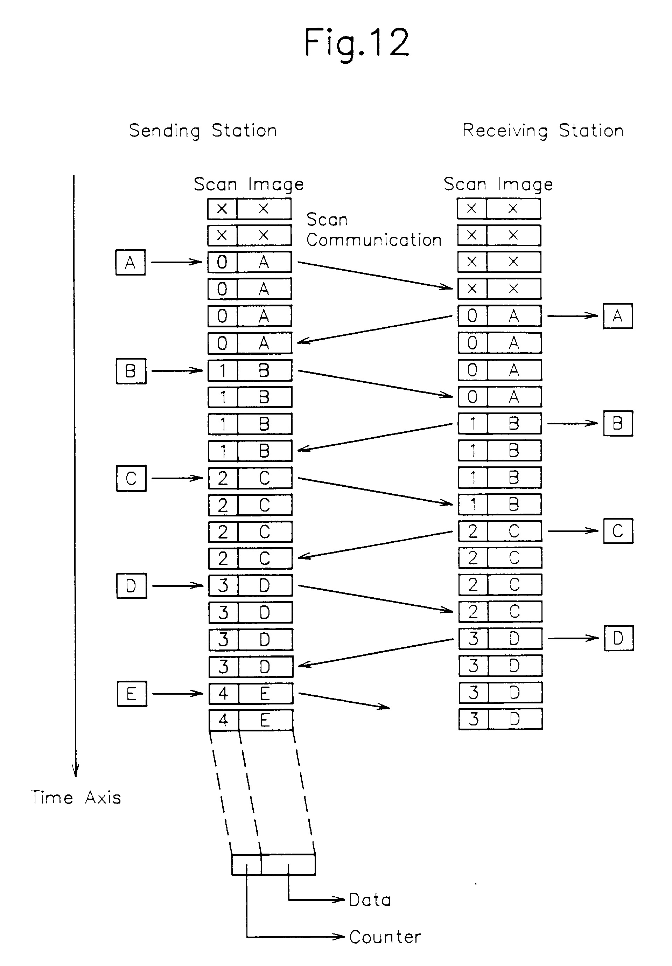

Fig. 12 is a timing chart showing a scan communication operation that is performed by the data sending station (control station FC) and the data receiving station (remote input/output device PO) in the above-described arrangement. It is assumed that data "A" to "E" is to be transferred from the sending station to the receiving station.

Upon commencing transfer of data "A" at the sending station FC, the signal sending means 53 and the count adding means 55 carry out scan communication by adding a new counter value "0" to the data "A" to be transferred. In this data transfer operation, the same communication frame, which comprises the data "A" and the counter value "0", is repeatedly sent for each scan communication cycle until the control process shifts to the next step.

At the receiving station PO, the count extracting means 84 extracts a counter value from the received signal, If there is a difference between the counter value extracted from the signal received by the present reception and the counter value extracted from the signal received by the preceding reception, the data transfer recognizing means 85 judges that the transfer of new data has started, and stores the sent data "A" into a predetermined region of the memory 83 so that the microprocessor 81 can use it. The signal returning means 86, when receiving data, returns the received data "A" and the counter value "0" to the sending station by scan communication in a predetermined cycle. In this operation, the same data and the same counter value are repeatedly sent for each scan communication cycle until the control process shifts to the next step.

At the data sending station FC, the transfer confirming means 56 receives the data "A" and the counter value "0", which are sent back from the data receiving station by scan communication, and compares them with the data and counter value, which are now being sent out. If the data and counter values match each other, the transfer confirming means 56 judges that the data transfer has been correctly carried out, and instructs the signal sending means 53 to send new data "B", together with a counter value, which is counted up, for example, i.e., "1", to the receiving station. On receipt of such an instruction, the signal sending means 53 enters a new step where it sends the new data "B" and the counter value "1" to the receiving station.

If the received data and counter value do not match the data and counter value, which are now being sent out due to a communication failure, e.g., loss of a communication frame, the transfer confirming means 56 instructs the signal sending means 53 to continue the sending of the data "A" and the counter value "0", which are now being sent out. In this way, the sending and receiving stations perform reliable transfer of data "A", "B"... while executing handshaking.

Although in the foregoing description the counter value is counted up, it may be counted down.

By carrying the above-described scan communication, various kinds of data can be surely transferred to the remote station independently of communication errors.

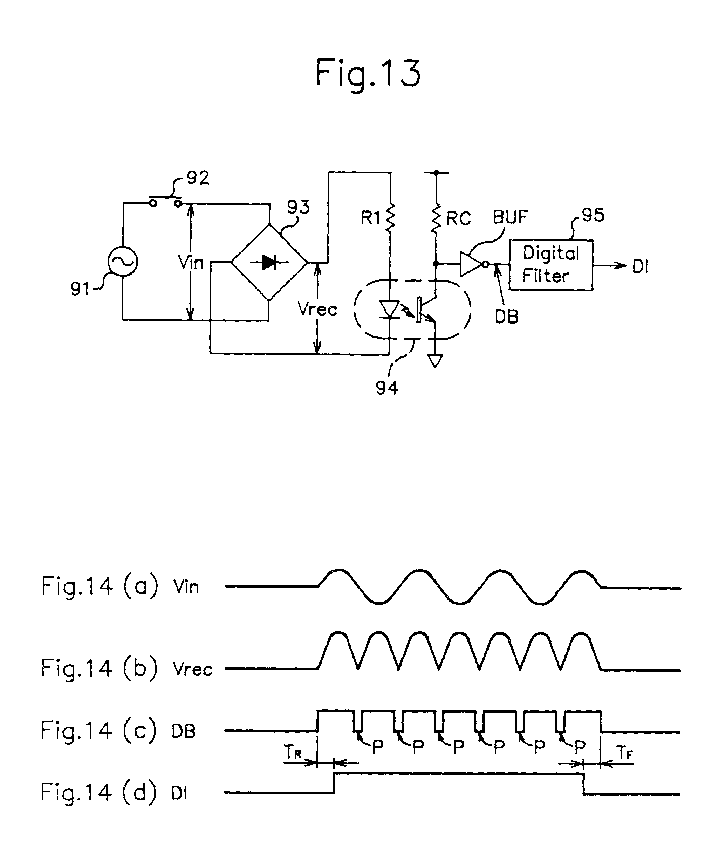

Fig. 13 is a block diagram showing one example of an input circuit for inputting a DC voltage signal, an on/off signal of a switching element, and an AC voltage signal in the remote input/output device PO.

In the figure, reference numeral 91 denotes a AC power supply. A switching element 92, for example, a relay contact, outputs a status signal in accordance with the controlled condition of the process. It should be noted that in a case where the AC power supply 91 itself shows an on/off state in accordance with the controlled condition of the process, the switching element 92 is eliminated. A diode bridge rectifier circuit 93 rectifies an input AC voltage signal that is applied via the switching element 92 and outputs a unipolar voltage signal V_{rec}, which is not smoothed. A signal isolating means 94 is supplied with the unipolar voltage signal V_{rec} through a resistance R1 and driven by this voltage signal. In this example, a photocoupler is employed as the signal isolating means 94.

Reference symbol RC denotes a load resistance for the signal isolating means (photocoupler) 94. A buffer BUF receives the signal that is transmitted through the photocoupler 94. A digital filter circuit 95 is supplied with the output of the buffer BUF, that is, the isolated digital signal DB that is transmitted through the signal isolating means 94. The digital filter circuit 95 is arranged to remove short-time off-signals from the signal applied thereto and to output a digital signal DI.

Fig. 14 is a timing chart showing one example of the operation of the input circuit described above. It is assumed that an AC voltage signal Vᵢₙ is output in accordance with the on/off state of the switching element 92, as shown at (a) in Fig. 14.

The diode bridge rectifier circuit 93 subjects the AC supply voltage to full-wave rectification and outputs a unipolar voltage signal V_{rec}, as shown at (b) in Fig. 14. The signal isolating means 94 is driven with the rectified voltage signal so as to output an isolated digital signal DB including short pulse signals P, as shown at (c) in Fig. 14, from the output end of the buffer BUF.

The digital filter circuit 95 removes the short-time off-signal (short pulse signals) P from the isolated digital signal DB transmitted through the signal isolating means 94 and outputs the resulting signal as a digital output signal DI, as shown at (d) in Fig. 14.

The digital output signal DI has delays T_{R} and T_{F} at the rise and fall thereof, as illustrated. However, the delays T_{R} and T_{F} are of the order of 40% (2 x 2 x 0.1) of the period of the AC power supply at the maximum and can be reduced to values which have substantially no adverse effect in the normal operation.

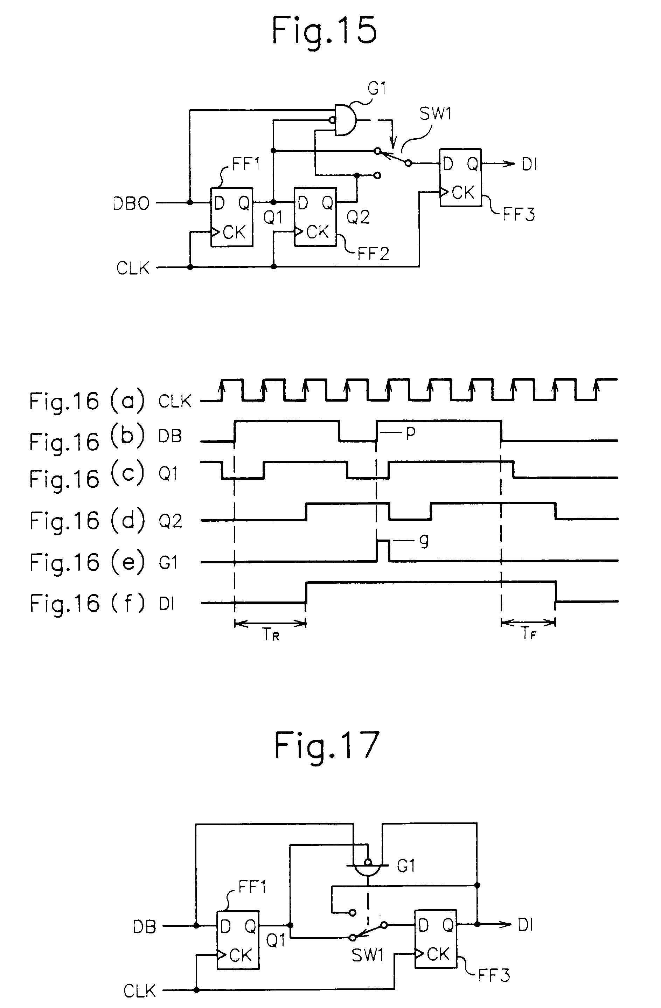

Fig. 15 is a block diagram showing one example of the digital filter circuit 95 in the arrangement shown in Fig. 13. In Fig. 15, reference symbols FF1, FF2 and FF3 denote flip-flops. A gate circuit G1 is supplied with the isolated digital signal DB and the respective outputs Q1 and Q2 of the flip-flops FF1 and FF2. A switch SW1 is driven by the output of the gate circuit G1 so as to select either of the outputs Q1 and Q2 of the flip-flops FF1 and FF2 and apply the selected output to the flip-flop FF3.

The flip-flops FF1 and FF2 are arranged in the form of shift registers so that either of the outputs Q1 and Q2 of the flip-flops FF1 and FF2 is selected in accordance with the output of the gate circuit G1 and latched by the flip-flop flop FF3. It should be noted that each flop-flop operates on the clock CLK.

This circuit realizes, as a digital filter algorithm used in the case of full-wave rectification, an operation wherein if the isolated digital signal DB continues longer than a specified time (e.g., 1 clock period), the output digital signal DI = DB; in other cases, DI = no change.

Fig. 16 is a timing chart showing the operation of the circuit shown in Fig. 15.

In the figure, (a) shows the clock CLK that is applied to each flip-flop, and (b) shows the isolated digital signal DB. During the interval TR that is immediately after the isolated digital signal DB has risen, the respective outputs Q1 and Q2 of the flip-flops FF1 and FF2 successively rise in response to the rise of the isolated digital signal DB, as shown at (c) and (d) in Fig. 16, and the output digital signal DI also rises in synchronism with the second clock.

When the isolated digital signal DB temporarily becomes "0" halfway, as shown by the arrow P, it is reflected on the outputs Q1 and Q2 of the flip-flops FF1 and FF2. If the interval during which the isolated digital signal DB temporarily becomes and remains "0" is shorter than one period of the clock CLK, the isolated digital signal DB becomes "1" before the output Q2 becomes "0". Therefore, the output of the gate circuit G1 becomes "1" (high level), as shown at (e) in Fig. 16, so that the switch SW1 selects the output Q2 of the flip-flop FF2, and the flip-flop FF3 latches it. Accordingly, the digital output DI from the flip-flop FF3 does not change, but maintains the high-level state, as shown at (f) in Fig. 16.

If the isolated digital signal DB becomes and remains "0" for a longer time than one period of the clock CLK as in the case of the interval TF immediately after the isolated digital signal DB has fallen, the switch SW1 does not change over, and the digital output DI from the flip-flop FF3 falls, as shown at (f) in Fig. 16, when the time TF has elapsed from the fall of the isolated digital signal DB (i.e., when one period of the clock CLK has elapsed from the fall of the isolated digital signal DB).

By this operation, even if the isolated digital signal DB becomes and remains "0" for a period of time shorter than one period of the clock CLK, the digital output DI from the flip-flop FF3 is maintained at the high level.

In the case of full-wave rectification of the AC power supply AC, the period of time during which the isolated digital signal DB becomes and remains "0" only for a short time is of the order of 2 ms in the case of 50 Hz, for example, which is about 1/10 of one period. Therefore, it will suffice to select the period of the clock CLK to be about 4 ms.

Fig. 17 is a block diagram showing another example of the digital filter circuit 95 in the arrangement shown in Fig. 13.

In this example, the flip-flop FF2 in the example that is shown in Fig. 15 is eliminated. The gate circuit G1 is supplied with the isolated digital signal DB and the respective outputs of the flip-flops FF1 and FF3. The switch SW1 selects either the output Q1 of the flip-flop FF1 or the output Q3 of the flip-flop FF3 in accordance with the output of the gate circuit G1 and applies the selected output to the flip-flop FF3.

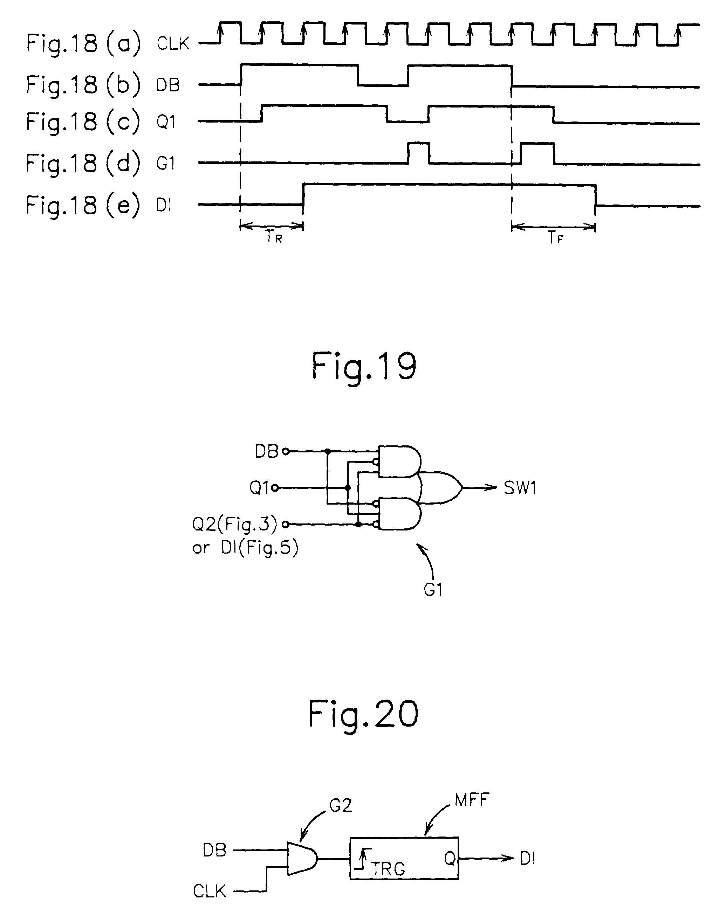

Fig. 18 is a timing chart showing the operation of the circuit, which is shown in Fig. 17, in the case of full-wave rectification.

The gate circuit G1 is supplied with the isolated digital signal DB, a signal <Q1> (<> represents an inverted state), which is obtained by inverting the output Q1 of the flip-flop FF1, and the output Q3 of the flip-flop FF3, and drives the switch SW1 in accordance with the result of a logical operation executed using these input signals. The basis operation of the circuit is the same as that of the circuit shown in Fig. 15.

Fig. 19 is a circuit diagram showing another arrangement of the gate circuit G1 employed in the circuits shown in Figs. 15 and 17. The gate circuit G1 comprises three gates so that a driving signal G1 for the switch SW1 is output from the gate circuit G1 according to the following logical expression:$\text{G1=(DB·<Q1>·Q2)+(<DB>·Q1·<Q2>)}$
in the case of Fig. 15$\text{G1=(DB·<Q1>·D1)+(<DB>·Q1·<D1>)}$
in the case of Fig. 17

By employing the gate circuit, arranged as described above, a positive ("1") pulse shorter than the clock period can also be processed, and it is possible to remove impulse noise and chattering of the switch.

Fig. 20 is a block diagram showing one example of the digital filter circuit 95 that is employed in a case where the rectifier circuit 93, shown in Fig. 13, performs half-wave rectification. When the rectifier circuit 93 is a half-wave rectifier circuit, the period of time during which the isolated digital signal DB becomes and remains "0" is longer than in the case of the full-wave rectifier circuit. Accordingly, in this example, the following algorithm of the digital filter is realized:

When the isolated digital signal DB becomes "1" (high level), the digital signal output DI is set to DI = "1".

If the isolated digital signal DB remains "0" (low level) longer than one period of the AC power supply, the digital signal output DI is set to DI = "0".

In other cases, the digital signal output DI is not changed, i.e., DI = no change.

In this example, the digital filter comprises a gate circuit G2 that is supplied with the isolated digital signal DB and the clock CLK, and a monostable multivibrator MFF to which the output signal from the gate circuit G2 is applied.

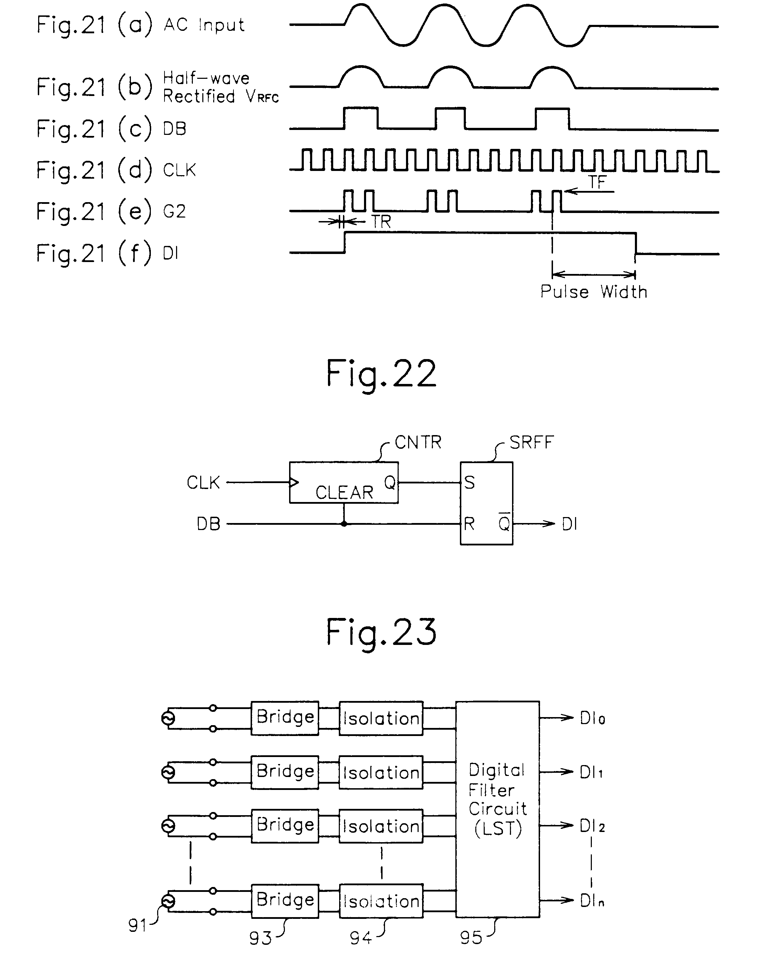

Fig. 21 is a timing chart showing the operation of the digital filter shown in Fig. 20.

The gate circuit G2 is supplied with an isolated digital signal DB and a clock CLK such as those shown at (c) and (d), respectively, in Fig. 21, and outputs a clock that is applied during the period that the isolated digital signal DB is at the high level, as shown at (e) in Fig. 21. The monostable multivibrator MFF, in which is set a pulse width longer than one period of the AC power supply, receives as a trigger signal a pulse signal, such as that shown at (e) in Fig. 21, which is output from the gate circuit G2, and outputs a digital signal DI such as that shown at (f) in Fig. 21.

It should be noted that since there is a likelihood in this embodiment that the signal may be affected by noise, the isolated digital signal may be applied through an impulse noise eliminating circuit such as that shown in Fig. 19.

Fig. 22 is a block diagram showing another example of the digital filter circuit 95 that is employed in a case where the rectifier circuit 93 that is shown in Fig. 13 is a half-wave rectifier circuit.

In this example, the digital filter comprises a counter CNTR which is supplied at a clear terminal thereof with an isolated digital signal DB and which counts clocks CLK, and a flip-flop SRFF which is set by a signal Q that rises when the counter CNTR has counted N clocks CLK and which is reset when the isolated digital signal DB becomes "1".

Although in the foregoing embodiments the digital filter 4 is formed by using hardware, the arrangement may be such that a microprocessor is used to read an isolated digital signal every predetermined period of time, and a program that executes the same algorithm as the operation executed by any of the digital filters shown in Figs. 15, 17, 19, 20 and 22 is installed.

Fig. 23 is a conceptual view showing a voltage signal input circuit which may be employed when a plurality of voltage signals are input.

In this embodiment, a combination of a rectifier circuit 93 and a signal isolating means 94 is provided to correspond to each input signal, and a single digital filter circuit 95 is used for each input signal in a time-division manner. If the digital filter circuit 95 is formed by using an LSI, for example, the cost can be reduced.

The voltage signal input circuit, having the above-described arrangement, provides the following advantages: (a) since it does not use large-sized and costly parts such as a transformer, a capacitor that withstands high voltage, etc., it is possible to reduce the overall size of the circuit and also lower the cost; (b) since there is no energy storage part, a high level of safety is attained, and high response can be obtained; and (c) since the same operation is also available for DC input, the circuit can be used for both AC and DC, thus providing general-purpose properties.

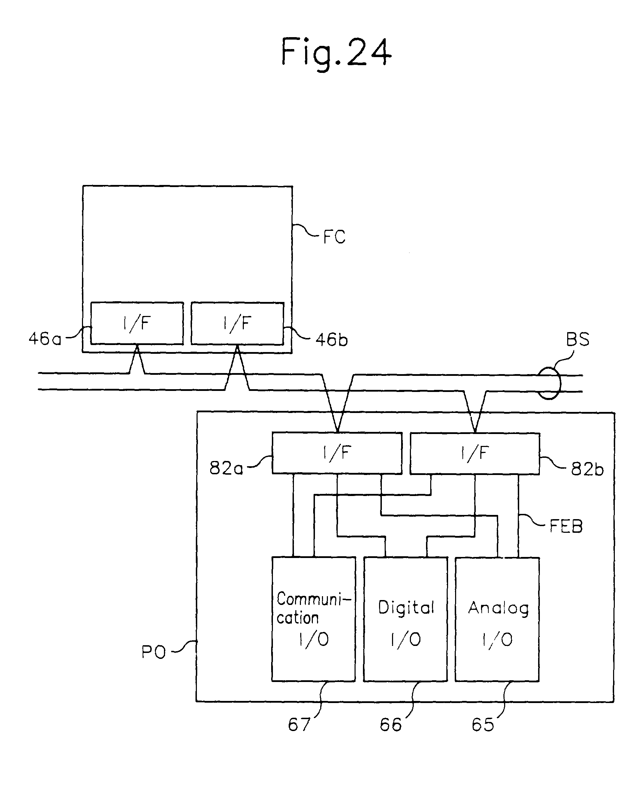

Fig. 24 is a conceptual view showing an arrangement in which the bus BS that connects the control station FC and the remote input/output device PO is doubled. In the control station FC, communication interfaces 46a and 46b are provided to correspond to two bus lines that constitute a double bus BS, and also in the remote input/output device PO, communication interfaces 82a and 82b are provided to correspond to the two bus lines. Normally, data transmission is carried out by alternately using the two lines of the bus BS, thereby making it possible to discover immediately an abnormality, if any, in either of the bus lines or in a communication interface. If an abnormality occurs, a normal bus or normal communication interfaces are used to continue the data transmission.

The bus BS is usually connected with a plurality of remote input/output devices PO, although only one of them is illustrated in the figure. Accordingly, the communication interface 46 in the control station FC serves as a central master that controls cyclic scan transmission that is carried out between the control station FC and each remote input/output device PO.

Incidentally, if the control station, which serves as a central master, goes down, the communication frame on the bus BS is cut off. To cope with such a situation, the communication control may be effected in such a manner that the occurrence of such a failure is detected at the remote input/output device (PO) side, and the right to communicate (token) is circulated among the remote input/output devices PO.

Referring to Fig. 24, the remote input/output device PO is provided therein with an analog input/output unit 65 that handles an analog signal, a digital input/output unit 66 that handles a digital signal, and a communication input/output unit 67 that handles communication with the outside.

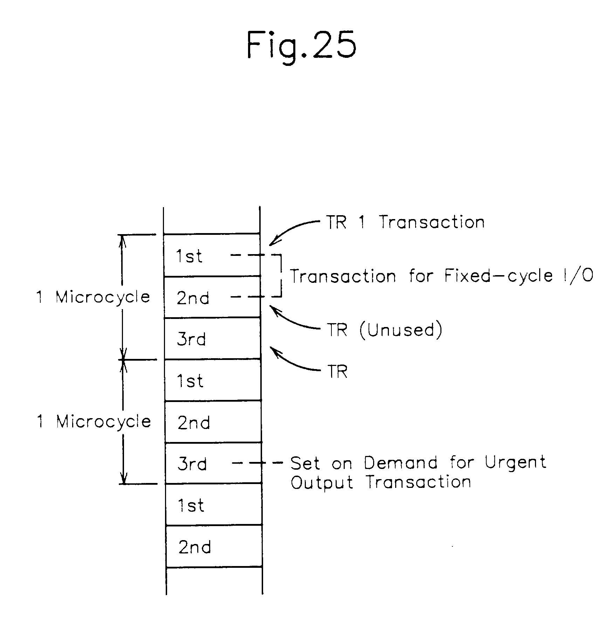

Fig. 25 is a conceptual view showing the way of processing a communication packet that is sent to an internal bus FEB that connects each of the input/output units 65, 66 and 67 and the communication interface 82 (assumed to be a parallel interface) in the remote input/output device PO.

Cyclic scan transmission is also carried out between each of the input/output units 65, 66 and 67 and the communication interface 82 by using the internal bus FEB.

This cyclic scan transmission is serial communication that is carried out in the minimum unit (referred to as "microcycle) of one cycle for fixed-cycle communication between each of the input/output units 65, 66 and 67 and the communication interface 82. Communication of 1 microcycle comprises 3 transactions, which are minimum units for transmission and reception. Fixed-cycle input/output data is set to the first and second transactions for effecting cyclic scan transmission. The third transaction is used for asynchronous processing and usually unused.

Fixed-cycle input/output data transmission, which is carried out by using the first and second transactions, is executed by transmitting a communication packet for fixed-cycle input/output data transmission, which has been set to the first and second transactions in advance, by using command-response transmission according to a scheduling table (i.e., a table for controlling the scan cycle, which describes for each I/O node a scan cycle for making access to it), which is determined by the scan cycle preset for each I/O node.

More specifically, fixed-cycle data that is transmitted from each input/output unit to the communication interface 82 is process data, for example, data on temperature, flow rate, pressure, etc., which are collected from the process field. Such fixed-cycle data is set to the first and second transactions and sent in this state. Similarly, data that is transmitted from the communication interface 82 to an input/output unit is control output data used to control an actuator, e.g., a valve, which is installed as a control element, and such control output data is set to the first and second transactions and sent in this state.

By such cyclic scan transmission, pieces of data that are exchanged between each of the input/output units 65, 66 and 67 and the communication interface 82 are updated and reflected on each other in the fixed cycle. Further, urgent input/output data transmission is handled as asynchronous communication by setting a communication packet for urgent output to command-response transmission carried out by using the third transaction of a microcycle communication that is sent immediately after an urgent output request.

More specifically, when the communication interface 82 receives information about a matter which should be handled urgently from the control station FC, for example, a control output that instructs a valve to be urgently closed to the safe side, the communication interface 82 sets the urgent output data to the third transaction and sends it to the input/output unit concerned.

The third transaction is similarly used to transmit urgent information from an input/output unit to the control station FC through the communication interface 82.

It should be noted that urgent processing that is executed by using the third transaction includes ordinary interruption processing.

Thus, all the three transactions in one microcycle for command-response transmission are not used for fixed-cycle processing, but one transaction is allotted for asynchronous processing, for example, urgent output, thereby enabling urgent processing to be executed without impairing the collection of ordinary process data and the control output transmission processing despite serial communication.

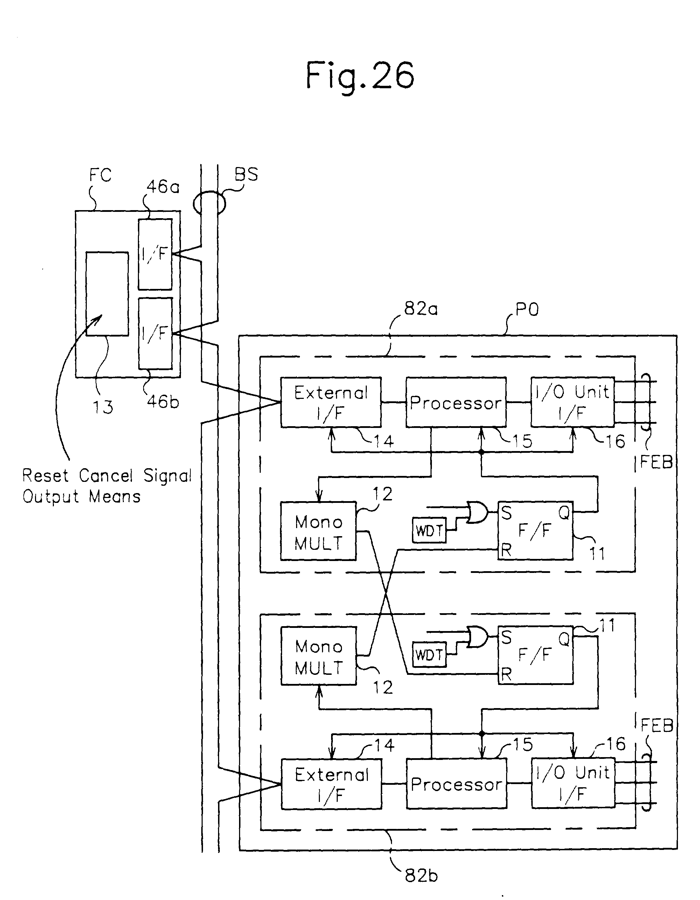

Fig. 26 is a block diagram of an arrangement whereby a reset state in the remote input/output device PO can be canceled from the control station FC without the need for providing a special control signal line between the control station FC and the remote input/output device PO. In this arrangement, the control station FC and the remote input/output device PO are connected through a pair of bus lines constituting a double bus BS, and the remote input/output device PO is provided with a pair of first and second communication interfaces 82a and 82b.

In each of the first and second communication interfaces 82a and 82b, a reset signal holding means 11 outputs and holds an internal reset signal upon receiving an abnormality detecting signal that is generated when an abnormality occurs in the remote input/output device PO. In this example, the reset signal holding means 11 is formed by using a flip-flop (F/F). A counterpart reset control means 12 receives a reset cancel signal that is sent from the control station FC through the bus BS, and applies the reset cancel signal to the reset signal holding means 11 in the other communication interface. In this example, the counterpart reset control means 12 is formed by using a monostable multivibrator (MONO MULT), for example.

In the control station FC, a reset cancel signal output means 13 that watches whether either of the first and second communication interfaces 82a and 82b in the remote input/output device PO enters a reset state, and outputs, when detecting a reset state of one communication interface, a reset cancel signal to the other communication interface, which is not in a reset state.

With this arrangement, a reset state in the remote input/output device PO can be canceled from the control station FC without the need for providing a special control signal line.

In the arrangement shown in Fig. 26, the first and second communication interfaces 82a and 82b have the same arrangement. In the figure, an external bus interface 14 is connected to the bus BS, and an IO interface 16 is connected to an I/O unit through an internal bus FEB. Further, a communication control processor 15 is provided in between the external bus interface 14 and the IO interface 16.

The monostable multivibrator 12, which constitutes a counterpart reset control means, is arranged to receive a signal output from the communication control processor 15 and reset the contents of the reset signal holding means (flip-flop) 11 in the other communication interface.

The reset signal holding means (flip-flop) 11 is supplied at a set terminal S thereof with a time-up signal from a watch dog timer WDT and other abnormality detecting signal through an OR circuit and also supplied at a reset terminal R with a signal from the monostable multivibrator 12 in the other communication interface. The Q output of the flip-flop 11 is applied as an internal reset signal to the external bus interface 14, the communication control processor 15 and the IO interface 16.

In one communication interface (e.g., 82a), the watch dog timer WDT and an abnormality detecting means (not shown) are watching whether or not the internal operation is in a normal state. If an abnormality occurs, for example, the watch dog timer WDT reaches a time-up state and outputs a time-up signal, or the abnormality detecting means detects the abnormality and outputs an abnormality detecting signal. The time-up signal or the abnormality detecting signal is applied to the set terminal S of the flip-flop 11 through the OR circuit, so that the flip-flop 11 is set. Thus, the internal reset signal becomes active, so that the external bus interface 14, the communication control processor 15 and the IO interface 16 are reset. Incidentally, the watch dog timer WDT reaches a time-up state not only when the communication control processor 15 itself has an operation failure but also when transient noise is generated.

The control station FC, which is connected to the remote input/output device PO through the bus BS, usually executes data transmission by scan communication by using either of the two bus lines constituting the double bus BS or by alternately using the two bus lines. When a communication interface (e.g., 82a) that is connected to the bus line being used presently in the control station FC enters a reset state such as that described above, no response is obtained from the communication interface 82a any longer. Accordingly, the control station FC recognizes that the communication interface 82a, which has been used so far, has entered a reset state, or the communication function has stopped, by the fact that no response is obtained. Then, the control station FC uses the bus line that is connected to the other communication interface 82b, thereby continuing the data transmission.

At this time, the control station FC effects reset cancel communication for canceling the reset state on the assumption that the communication interface 82a has been brought into the reset state due to the generation of transient noise.

Command communication for canceling the reset state is carried out by the reset cancel signal output means 13 in the control station FC, using the one of the two bus lines, constituting the double bus BS, which is connected to the second communication interface 82b. When a reset state cancel signal is applied to the second communication interface 82b, the reset control means 12 in the second communication interface 82b applies a reset signal to the reset terminal R of the flip-flop that constitutes the reset signal holding means 11 in the first communication interface 82a. Consequently, the flip-flop 11 is reset, so that the reset signal, which is output therefrom to the external bus interface 14, the communication processor 15 and the IO interface 16, is made inactive. Thus, the reset state of these elements is canceled. In this way, the reset state of the communication interface 82a is canceled.

The command communication for canceling the reset state is carried out a plurality of times (e.g., 3 times) on the assumption that transient noise is generated frequently, for example. When the reset state cannot be canceled even if the reset cancel communication is carried out a predetermined number of times, the communication interface 82a judges that the cause of the reset state is not transient noise (that is, some abnormality still remains). Thereafter, the communication interface 82a suspends the communication for canceling the reset state, and executes necessary processing, for example, display of a message that the communication interface 82a has some abnormality.

With the above-described arrangement, the reset state of one of the two communication interfaces, which constitute a double communication interface, is canceled by using one of the two bus lines, which constitute a double bus. Thus, the reset state can be canceled from the control station FC.

## Claims

1. A distributed control system including a control station (FC) that takes charge of control operation, at least one remote input/output device (P01, P02, P03, P0n) that is connected to said control station through a remote input/output bus (BS), wherein cyclic scan transmission is performed so that input/output data handled by the control operation unit (1) and input/output data on the remote input/output device side are maintained equivalently during the data transmission carried out by using the remote input/output bus in a normal control operation state, and means (45) for timebased malfunction treatment,
characterized by further comprising:
continuation transmission service means (42) which first performs transmission through remote input/out bus (BS) for urgent output from the control station (FC) to only the remote input/output side and then performs normal cyclic scan transmission service after the completion of the transmission for urgent output,
initialization start transmission service means (43) which first performs cyclic scan transmission for input only from the remote input/output device (PO) to the control station (FC) and,
cutoff duration measuring means (44) which measures a period of transmission cutoff duration of said remote input/output bus, wherein:
said malfunction treatment means (45) effect control such that when the result of measurement made by said cutoff duration measuring means (44) is shorter than a predetermined time, said continuation transmission service means (42) is activated, whereas, when the result of measurement by said cutoff duration measuring means (44) is longer than said predetermined time, said initialization start transmission service means (43) is activated,
said control station (FC) comprises an output data holding means that holds the latest output data sent to said at least one remote input/output device (P01, P02, P03, P0n), and
said at least one remote input/output device (P01, P02, P03, P0n) comprises a no-response detecting means that detects whether or not there is data transmission through said remote input/output bus, or detects a time-up signal delivered from said control station.

2. A distributed control system according to claim 1, wherein said at least one remote input/output device (P01, P02, P03, P0n) includes:
a no-response detecting means that detect whether or not there is data transmission through said remote input/output bus, or detects a time-up signal delivered from said control station; and
a default value output means that outputs a signal of predetermined value to a process as a controlled system when a no-response state continues longer than a predetermined time in communication between said remote input/output device and said control station.

3. A distributed control system according to claim 1, wherein each of said transmission service means (42, 43) uses a data transmitting function including:
a data change detecting means (71) that detects whether or not there is a change in data which is to be sent;
a counter (72) that is activated to count up or down when said data change detecting means (71) detects a change in data which is to be sent; and
a count adding means (73) that adds a value of said counter (72) to a signal which is to be sent.

4. A distributed control system according to claim 1, wherein each of said transmission service means (42, 43) uses a data receiving function having a data change recognizing means (52) that recognizes a change in data by detecting a difference between a counter value included in a signal received in the present reception and a counter value included in a signal received in the preceding reception.

5. A distributed control system according to claim 1, wherein each of said transmission service means (42, 43) uses a data receiving function having a data change count recognizing means that detects either an increment or a decrement of a counter value to thereby recognize a number of times of change of a signal which has occurred since the preceding communication cycle.

6. A distributed control system according to claim 1, wherein said control station (FC) is provided with:
a signal sending means (53) that sends a command for processing to be executed at said remote input/output device;
a counter (54) that is activated to count up or down when a processing command is changed to another; and
a count adding means (55) that adds a value of said counter (54) to a signal which is to be sent;
and said at least one remote input/output device (PO) is provided with a command recognizing means (85) that recognizes that a new processing command has been sent to said remote input/output device (PO) by detecting a difference between a counter value included in a signal received in the present reception and a counter value included in a signal received in the preceding reception.

7. A distributed control system according to claim 1, wherein said control station (FC) is provided with:
a signal sending means (53) that sends a command for processing to be executed at said at least one remote input/output device (PO);
a counter (54) that is activated to count up or down when a processing command is changed to another;
a count adding means (55) that adds a value of said counter (54) to a signal which is to be sent; and
a transfer confirming means (56) that makes a comparison between a combination of data and a counter value, which has been sent back from said remote input/output device (PO), and a combination of data and a counter value, which is now being sent out, thereby checking whether or not the data transfer has been surely effected;
and said at least one remote input/output device (PO) is provided with a command recognizing means (85) that recognizes that a new processing command has been sent to said remote input/output device (PO) by detecting a difference between a counter value included in a signal received in the present reception and a counter value included in a signal received in the preceding reception; and
a signal returning means (86) that returns received data and counter value to said control station (FC) by scan communication in a predetermined cycle.

8. A distributed control system according to claim 1, wherein said at least one remote input/output device (PO) includes:
a rectifier circuit (93) that rectifies an input voltage signal;.
a signal isolating means (94) that transmits a rectified output from said rectifier circuit (93) after electrically isolating it; and
a digital filter circuit (95) that removes a short-time off-signal from an output signal that is transmitted thereto through said signal isolating means (94), thereby obtaining an isolated digital output signal.

9. A distributed control system according to claim 1, wherein said at least one remote input/output device (PO) performs internal fixed-cycle communication, which includes serial communication carried out in 1 microcycle, which is the minimum unit of one cycle, said microcycle being divided into three transactions so that command-response transmission is carried out with each transaction, said first and second transactions being allotted for fixed-cycle input/output processing, and said third transaction being allotted for asynchronous processing.

10. A distributed control system according to claim 1, wherein said control station (FC) and said at least one remote input/output device (PO) are each formed in a double structure, and said remote input/output device (PO) is provided with a pair of first and second communication interfaces (82a, 82b), which are each provided with:
a reset signal holding means (11) that outputs and holds an internal reset signal upon receiving an abnormality detecting signal that is generated when an abnormality occurs in said remote input/output device (PO); and
a counterpart reset control means (12) that receives a reset cancel signal sent from said control station (FC) through said bus and applies said reset cancel signal to said reset signal holding means (11) in the other communication interface.

11. A distributed control system according to claim 1, wherein said control station (FC) is provided with a reset cancel signal output means (13) that watches whether or not either of said first and second communication interfaces (82a, 82b) in said at least one remote input/output device (PO) enters a reset state, and outputs, when detecting a reset state of one communication interface, a reset cancel signal to the other communication interface, which is not in a reset state.

12. A distributed control system according to claim 11, wherein said reset cancel signal output means (13) executes communication for cancellation of a reset state a predetermined number of times.

## Patentansprüche

1. Verteiltes Steuersystem mit einer Steuerstation (FC), die eine Steueroperation übernimmt, wenigstens einer Fern-Eingangs/Ausgangsvorrichtung (P01, P02, P03, P0n), die mit der Steuerstation über einen Fern-Eingangs/Ausgangsbus (BS) verbunden ist, wobei die zyklische Abtastübertragung so durchgeführt wird, daß Eingangs/Ausgangsdaten, die durch die Steueroperationseinheit (1) gehandhabt sind, und Eingangs/Ausgangsdaten auf der Fern-Eingangs/-Ausgangsvorrichtungsseite gleichwertig während der Datenübertragung gehalten sind, die mittels des Fern-Eingangs/Ausgangsbusses in einem Normalsteueroperationszustand ausgeführt wird, und einer Einrichtung (45) zur Fehlfunktionsbehandlung auf Zeitbasis,
gekennzeichnet durch weiterhin:
eine Fortsetzungsübertragungsserviceeinrichtung (42), die zuerst eine Übertragung durch Fern-Eingangs/Ausgangsbus (BS) für einen eiligen Ausgang von der Steuerstation (FC) zu lediglich der Fern-Eingangs/Ausgangsseite durchführt und dann einen normalen zyklischen Abtastübertragungsservice nach Abschluß der Übertragung für eiligen Ausgang vornimmt, eine Initialisierungsstart-Übertragungsserviceeinrichtung (43), die zuerst eine zyklische Abtastübertragung für Eingang lediglich von der Fern-Eingangs/Ausgangsvorrichtung (PO) zu der Steuerstation (FC) durchführt, und
eine Abschaltzeitdauermeßeinrichtung (44), die eine Periode einer Übertragungsabschaltdauer des Fern-Eingangs/Ausgangsbusses mißt, wobei:
die Fehlfunktionsbehandlungseinrichtung (45) eine Steuerung bewirkt derart, daß, wenn das Ergebnis der Messung durch die Abschaltzeitdauer-Meßeinrichtung (44) kürzer als eine vorbestimmte Zeit ist,
die Fortsetzung-Übertragungsserviceeinrichtung (42) aktiviert wird, wohingegen, wenn das Meßergebnis durch die Abschaltzeitdauer-Meßeinrichtung (44) länger als die vorbestimmte Zeit ist, die Initialisierungsstart-Übertragungsserviceeinrichtung (43) aktiviert wird,
die Steuerstation (FC) eine Ausgangsdatenhalteeinrichtung umfaßt, die die letzten Ausgangsdaten hält, die zu wenigstens einer Fern-Eingangs/Ausgangsvorrichtung (P01, P02, P03, P0n) gesandt sind, und
die wenigstens eine Fern-Eingangs/Ausgangsvorrichtung (P01, P02, P03, P0n) eine Nicht-Antwort-Erfassungseinrichtung umfaßt, die erfaßt, ob eine Datenübertragung durch den Fern-Eingangs/Ausgangsbus erfolgt oder nicht, oder ein von der Steuerstation geliefertes Zeitaufwärtssignal feststellt.

2. Verteiltes Steuersystem nach Anspruch 1, bei dem die wenigstens eine Fern-Eingangs/Ausgangsvorrichtung (P01, P02, P03, P0n) umfaßt:
eine Nicht-Antwort-Erfassungseinrichtung, die erfaßt, ob eine Datenübertragung durch den Fern-Eingangs/Ausgangsbus vorliegt oder nicht, oder ein Zeitaufwärtssignal feststellt, das von der Steuerstation geliefert ist, und
eine Vorgabewertausgangseinrichtung, die ein Signal eines vorbestimmten Wertes zu einem Prozeß als einem gesteuerten System ausgibt, wenn ein Nicht-Antwort-Zustand länger als eine vorbestimmte Zeit in einer Kommunikation zwischen der Fern-Eingangs/-Ausgangsvorrichtung und der Steuerstation fortdauert.

3. Verteiltes Steuersystem nach Anspruch 1, bei dem jede der Übertragungsserviceeinrichtungen (42, 43) eine Datenübertragungsfunktion verwendet, die aufweist:
eine Datenänderungserfassungseinrichtung (71), die erfaßt, ob eine Änderung in den zu sendenden Daten vorliegt oder nicht,
einen Zähler (72), der aktiviert wird, um aufwärts oder abwärts zu zählen, wenn die Datenänderungserfassungseinrichtung (71) eine Änderung in den zu senden Daten erfaßt, und
eine Zählerstandaddiereinrichtung (73), die einen Wert des Zählers (72) zu dem zu sendenden Signal addiert.

4. Verteiltes Steuersystem nach Anspruch 1, bei dem jede der Übertragungsserviceeinrichtungen (42, 43) eine Datenempfangsfunktion mit einer Datenänderungserkennungseinrichtung (52) verwendet, die eine Änderung in Daten durch Erfassen einer Differenz zwischen einem Zählerwert, der in einem Signal enthalten ist, das in dem vorliegenden Empfang empfangen ist, und einem Zählerwert, der in einem Signal enthalten ist, der in dem vorangehenden Empfang empfangen ist, erkennt.

5. Verteiltes Steuersystem nach Anspruch 1, bei dem jede der Übertragungsserviceeinrichtungen (42, 43) eine Datenempfangsfunktion mit einer Datenänderungszählerstanderkennungseinrichtung verwendet, die entweder ein Inkrement oder ein Dekrement eines Zählerwertes erfaßt, um dadurch eine Anzahl von Änderungen eines Signales zu erkennen, die seit dem vorangehenden Kommunikationszyklus aufgetreten sind.

6. Verteiltes Steuersystem nach Anspruch 1, bei dem die Steuerstation (FC) versehen ist mit:
einer Signalsendeeinrichtung (53), die einen Befehl für eine bei der Fern-Eingangs/Ausgangsvorrichtung auszuführende Verarbeitung sendet,
einen Zähler (54), der aktiviert ist, um aufwärts oder abwärts zu zählen, wenn ein Verarbeitungsbefehl in einen anderen geändert wird, und
einer Zählerstandaddiereinrichtung (55), die einen Wert des Zählers (54) zu einem zu sendenden Signal addiert,
wobei die wenigstens eine Fern-Eingangs/Ausgangsvorrichtung (PO) mit einer Befehlserkennungseinrichtung (85) versehen ist, die erkennt, daß ein neuer Verarbeitungsbefehl zu der Fern-Eingangs/-Ausgangsvorrichtung (PO) gesandt wurde, indem eine Differenz zwischen einem Zählerwert, der in einem Signal enthalten ist, das in dem vorliegenden Empfang empfangen wird, und einem Zählerwert, der in einem Signal enthalten ist, das in dem vorangehenden Empfang empfangen ist, festgestellt wird.

7. Verteiltes Steuersystem nach Anspruch 1, bei dem die Steuerstation (FC) versehen ist mit:
einer Signalsendeeinrichtung (53), die einen Befehl für eine bei wenigstens einer Fern-Eingangs/Ausgangsvorrichtung (PO) auszuführenden Verarbeitung sendet,
einem Zähler (54), der aktiviert wird, um aufwärts oder abwärts zu zählen, wenn ein Verarbeitungsbefehl in einen anderen verändert wird,
einer Zählerstandaddiereinrichtung (55), die einen Wert des Zählers (54) zu einem Signal addiert, das zu senden ist, und
einer Übertragungsbestätigungseinrichtung (56), die einen Vergleich zwischen einer Kombination von Daten und einem Zählerwert, die von der Fern-Eingangs/Ausgangsvorrichtung (PO) zurückgesandt wurde, und einer Kombination von Daten und einem Zählerwert, die nunmehr ausgesandt sind, vornimmt, um dadurch zu prüfen, ob die Datenübertragung sicher bewirkt wurde oder nicht,
wobei die wenigstens eine Fern-Eingangs/Ausgangsvorrichtung (PO) mit einer Befehlserkennungseinrichtung (85) versehen ist, die erkennt, daß ein neuer Verarbeitungsbefehl zu der Fern-Eingangs/-Ausgangsvorrichtung (PO) gesandt wurde, indem eine Differenz zwischen einem Zählerwert, der in einem Signal enthalten ist, das bei dem vorliegenden Empfang empfangen ist, und einen Zählerwert, der in einem Signal enthalten ist, das in dem vorangehenden Empfang empfangen ist, festgestellt wird, und einer Signalrückkehreinrichtung (86), die empfangene Daten und Zählerwert zu der Steuerstation (FC) durch Abtastkommunikation in einem vorbestimmten Zyklus zurückführt.

8. Verteiltes Steuersystem nach Anspruch 1, bei dem die wenigstens eine Fern-Eingangs/Ausgangsvorrichtung (PO) umfaßt:
eine Gleichrichterschaltung (93), die ein Eingangsspannungssignal gleichrichtet,
eine Signalisoliereinrichtung (94), die ein von der Gleichrichterschaltung (93) gleichgerichtetes Signal sendet, nachdem sie elektrisch isoliert ist, und
eine Digitalfilterschaltung (95), die ein Kurzzeit-Aus-Signal aus einem Ausgangssignal entfernt, das dorthin durch die Signalisoliereinrichtung (94) übertragen ist, um so ein isoliertes Digitalausgangssignal zu erhalten.

9. Verteiltes Steuersystem nach Anspruch 1, bei dem die wenigstens eine Fern-Eingangs/Ausgangsvorrichtung (PO) eine interne Fest-Zyklus-Kommunikation durchführt, die eine serielle Kommunikation umfaßt, welche in 1 Mikrozyklus ausgeführt ist, der die Mindesteinheit eines Zyklus ist, wobei der Mikrozyklus in drei Transaktionen geteilt ist, so daß eine Befehl-Antwort-Übertragung mit jeder Transaktion ausgeführt wird, wobei die ersten und zweiten Transaktionen für eine Fest-Zyklus-Eingangs/Ausgangs-Verarbeitung zugewiesen sind und die dritte Transaktion einer asynchronen Verarbeitung zugewiesen ist.

10. Verteiltes Steuersystem nach Anspruch 1, bei dem die Steuerstation (FC) und die wenigstens eine Fern-Eingangs/Ausgangsvorrichtung (PO) in einer Doppelstruktur gebildet sind und die Fern-Eingangs/Ausgangsvorrichtung (PO) mit einem Paar von ersten und zweiten Kommunikationsschnittstellen (82a, 82b) versehen ist, die jeweils aufweisen: eine Rücksetzsignalhalteeinrichtung (11), die ein internes Rücksetzsignal nach Empfang eines Abnormalitätserfassungssignales, das erzeugt wird, wenn eine Abnormalität in der Fern-Eingangs/Ausgangsvorrichtung (PO) auftritt, ausgibt und hält, und eine Gegenteilrücksetzsteuereinrichtung (12), die ein Rücksetzlöschsignal empfängt, das von der Steuerstation (FC) über den Bus gesandt ist, und das Rücksetzlöschsignal an die Rücksetzsignalhalteeinrichtung (11) in der anderen Kommunikationsschnittstelle liegt.

11. Verteiltes Steuersystem nach Anspruch 1, bei dem die Steuerstation (FC) mit einer Rücksetzlöschsignalausgangseinrichtung (13) versehen ist, die überwacht, ob eine der ersten und zweiten Kommunikationsschnittstellen (82a, 82b) in der wenigstens einen Fern-Eingangs/Ausgangsvorrichtung (PO) in einen Rücksetzzustand eintritt, und, wenn ein Rücksetzzustand von einer Kommunikationsschnittstelle erfaßt wird, ein Rücksetzlöschsignal zu der anderen Kommunikationsschnittstelle abgibt, die nicht in einem Rücksetzzustand ist.

12. Verteiltes Steuersystem nach Anspruch 11, bei dem die Rücksetzlöschsignalausgangseinrichtung (13) eine Kommunikation zur Löschung eines Rücksetzzustandes in einer vorbestimmten Anzahl ausführt.

## Revendications

1. Système de commande avec répartition, comprenant une station de commande (FC) qui prend en charge une opération de commande, au moins un dispositif d'entrée/sortie éloigné (PO1, P02, P03, POn) qui est relié à ladite station de commande par l'intermédiaire d'un bus d'entrée/sortie éloigné (BS), où une transmission d'analyse cyclique est effectuée de telle sorte que des données d'entrée/sortie traitées par l'unité opérationnelle de commande (1) et des données d'entrée/sortie obtenues du côté du dispositif d'entrée/sortie éloigné soient maintenues de façon équivalente pendant la transmission de données effectuée par utilisation du bus d'entrée/sortie éloigné dans un état opérationnel de commande normal, et des moyens (45) pour un traitement de dysfonctionnement en base de temps, ledit système de commande avec répartition étant caractérisé en ce qu'il comprend en outre :
- un moyen fonctionnel de transmission pour continuation (42), qui effectue d'abord par l'intermédiaire du bus d'entrée/sortie éloigné (BS) une transmission pour sortie urgente depuis la station de commande (FC) seulement jusqu'au côté d'entrée/sortie éloigné et qui effectue ensuite une opération de transmission d'analyse cyclique normale après la terminaison de la transmission pour sortie urgente,
- un moyen fonctionnel de transmission pour début d'initialisation (43) qui effectue d'abord une transmission d'analyse cyclique pour une entrée seulement depuis le dispositif d'entrée/sortie éloigné (PO) jusqu'à la station de commande (FC) et
- un moyen de mesure de durée d'interruption (44) qui mesure une durée d'interruption d'une période de transmission dudit bus d'entrée/sortie éloigné,
- système de commande dans lequel :
- ledit moyen de traitement de dysfonctionnement (45) effectue une commande de telle sorte que, quand le résultat d'une mesure effectuée par ledit moyen de mesure de durée d'interruption (44) est plus court qu'un temps prédéterminé, ledit moyen opérationnel de transmission pour continuation est activé tandis que, quand le résultat d'une mesure effectuée par ledit moyen de mesure de durée d'interruption (44) est plus long que ledit temps prédéterminé, ledit moyen opérationnel de transmission pour début d'initialisation (43) est activé,
- ladite station de commande (FC) comprend un moyen de retenue de données de sortie qui retient la dernière donnée de sortie qui a été envoyée audit dispositif d'entrée/sortie éloigné (PO1, P02, P03, POn), prévu en nombre au moins égal à l'unité, et
- ledit dispositif d'entrée/sortie éloigné (PO1, P02, P03, POn) prévu en nombre au moins égal à l'unité, comprend un moyen de détection d'absence de réponse qui détecte s'il se produit ou non une transmission de données par l'intermédiaire dudit bus d'entrée/sortie éloigné ou bien qui détecte un signal de temporisation provenant de ladite station de commande.

2. Système de commande avec répartition, selon la revendication 1, dans lequel ledit dispositif d'entrée/sortie éloigné (PO1, P02, P03, POn), prévu en nombre au moins égal à l'unité, comprend :
- un moyen de détection d'absence de réponse qui détecte s'il se produit ou non une transmission de données par l'intermédiaire dudit bus d'entrée/sortie éloigné, ou bien qui détecte un signal de temporisation produit par ladite station de commande ; et
- un moyen de sortie de valeur de défaut qui produit à sa sortie un signal d'une valeur prédéterminée transmis à un système opératoire comme un système commandé lorsqu'un état d'absence de réponse a une durée supérieure à un temps prédéterminé dans une communication entre ledit dispositif d'entrée/sortie éloigné et ladite station de commande.

3. Système de commande avec répartition selon la revendication 1, dans lequel chacun desdits moyens fonctionnels de transmission (42, 43) utilise un système fonctionnel de transmission de données comportant :
- un moyen de détection de changement de données (71) qui détecte s'il se produit ou non un changement dans une donnée devant être transmise ;
- un compteur (72) qui est actionné pour effectuer un comptage progressif ou régressif quand ledit moyen de détection de changement de données (71) détecte un changement dans une donnée devant être transmise ; et
- un moyen d'addition de compte (73) qui ajoute une valeur dudit compteur (72) à un signal qui doit être transmis.

4. Système de commande avec répartition selon la revendication 1, dans lequel chacun desdits moyens opérationnels de transmission (42, 43) utilise un système fonctionnel de réception de données comportant un moyen de reconnaissance de changement de donnée (52) qui reconnaît un changement de donnée en détectant une différence entre une valeur de compteur contenue dans un signal reçu dans la réception présente et une valeur de compteur contenue dans un signal reçu dans la réception précédente.

5. Système de commande avec répartition selon la revendication 1, dans lequel chacun desdits moyens opérationnels de transmission (42, 43) utilise un système fonctionnel de réception de données comportant un moyen de reconnaissance de compte représentant un changement de donnée, qui détecte soit une augmentation soit une diminution d'une valeur de compteur pour reconnaître ainsi un nombre de changements d'un signal qui se sont produits depuis le cycle de transmission précédent.

6. Système de commande avec répartition selon la revendication 1, dans lequel ladite station de commande (FC) comprend :
- un moyen d'émission de signaux (53) qui envoie un ordre concernant un traitement à exécuter audit dispositif d'entrée/sortie éloigné ;
- un compteur (54) qui est actionné pour effectuer un comptage progressif ou régressif lorsqu'un ordre de traitement est changé en un autre ; et
- un moyen d'addition de compte (55) qui ajoute une valeur dudit compteur (54) à un signal qui doit être envoyé ;
- et ledit dispositif d'entrée/sortie éloigné (PO), prévu en nombre au moins égal à l'unité, est pourvu d'un moyen de reconnaissance d'ordre (85) qui reconnaît qu'un nouvel ordre de traitement a été envoyé audit dispositif d'entrée/sortie éloigné (PO) en détectant une différence entre une valeur de compteur contenue dans un signal reçu dans la réception présente et une valeur de compteur contenue dans un signal reçu dans la réception précédente.

7. Système de commande avec répartition selon la revendication 1, dans lequel ladite station de commande (FC) comprend :
- un moyen d'émission de signaux (53) qui envoie un ordre concernant un traitement à exécuter audit dispositif d'entrée/sortie éloigné (PO) prévu en nombre au moins égal à l'unité ;
- un compteur (54) qui est actionné pour effectuer un comptage progressif ou régressif quand un ordre de traitement est changé en un autre ;
- un moyen d'addition de compte (55) qui ajoute une valeur dudit compteur (54) à un signal devant être envoyé ; et
- un moyen de confirmation de transfert (56) qui effectue une comparaison entre une combinaison de donnée et d'une valeur de compteur, qui a été renvoyée à partir du dispositif d'entrée/sortie éloigné (PO), et une combinaison de donnée et d'une valeur de compteur, qui est maintenant en train d'être envoyée, en vérifiant ainsi si le transfert de donnée a été ou non effectué d'une manière sure ;
- et ledit dispositif d'entrée/sortie éloigné (PO), prévu en nombre au moins égal à l'unité, comprend un moyen de reconnaissance d'ordre (85) qui reconnaît qu'un nouvel ordre de traitement a été envoyé audit dispositif d'entrée/sortie éloigné (PO) en détectant une différence entre une valeur de compteur contenue dans un signal reçu dans la réception présente et une valeur de compteur contenue dans un signal reçu dans la réception précédente ; et
- un moyen de renvoi de signaux (86) qui renvoie une donnée et une valeur de compteur reçues à ladite station de commande (FC) par une transmission d'analyse dans un cycle prédéterminé.

8. Système de commande avec répartition selon la revendication 1, dans lequel ledit dispositif d'entrée/sortie éloigné (PO), prévu en nombre au moins égal à l'unité comprend :
- un circuit redresseur (93) qui redresse un signal de tension d'entrée ;
- un moyen d'isolation de signaux (94) qui transmet un signal de sortie redressé à partir dudit circuit redresseur (93) après son isolation électrique et
- un circuit de filtrage numérique (95) qui élimine un signal secondaire de temps court d'un signal de sortie qui lui est transmis par l'intermédiaire dudit moyen d'isolation de signaux (94), en obtenant ainsi un signal de sortie numérique isolé.

9. Système de commande avec répartition selon la revendication 1, dans lequel ledit dispositif d'entrée/sortie éloigné (PO), prévu en nombre au moins égal à l'unité, effectue une transmission interne en cycle fixe, qui comprend une transmission en série effectuée pendant 1 microcycle, qui est l'unité minimale d'un cycle, ledit microcycle étant divisé en trois transactions de telle sorte qu'une transmission de réponse à un ordre soit effectuée pour chaque transaction, lesdites première et seconde transactions étant affectées à un traitement d'entrée/sortie en cycle fixe, et ladite troisième transaction étant affectée à un traitement asynchrone.

10. Système de commande avec répartition selon la revendication 1, dans lequel ladite station de commande (FC) et ledit dispositif d'entrée/sortie éloigné (PO), prévu en nombre au moins égal à l'unité, sont chacun agencés sous forme d'une double structure et ledit dispositif d'entrée/sortie éloigné (PO) est pourvu d'une paire d'interfaces de communication, formant une première et une seconde interface de communication (82a, 82b), qui comprennent chacune :
- un moyen de maintien de signal de retour à l'état initial (11), qui produit à sa sortie et maintient un signal interne de retour à l'état initial lors de la réception d'un signal de détection d'anormalité qui est produit lorsqu'une anormalité se manifeste dans ledit dispositif d'entrée/sortie éloigné (PO) ; et
- un moyen de commande de retour à l'état initial en contre-partie (12), qui reçoit un signal d'annulation de retour à l'état initial émis par ladite station de commande (FC) par l'intermédiaire dudit bus et qui applique ledit signal d'annulation de retour à l'état initial audit moyen de maintien de signal de retour à l'état initial (11) prévu dans l'autre interface de communication.

11. Système de commande avec répartition selon la revendication 1, dans lequel ladite station de commande (FC) comprend un moyen de sortie de signal d'annulation de retour à l'état initial (13) qui contrôle si l'une ou l'autre desdites première et seconde interfaces de communication (82a, 82b) prévues dans ledit dispositif d'entrée/sortie éloigné (PO) entre ou non dans une condition de retour à l'état initial, et qui produit à sa sortie, lors de la détection d'une condition de retour à l'état initial d'une interface de communication, un signal d'annulation de retour à l'état initial transmis à l'autre interface de communication, qui ne se trouve pas dans une condition de retour à l'état initial.

12. Système de commande avec répartition selon la revendication 11, dans lequel ledit moyen de sortie de signal d'annulation de retour à l'état initial (13) effectue une communication pour annulation d'une condition de retour à l'état initial un nombre de fois prédéterminé.
